# EUROPEAN PATENT APPLICATION

(11) **EP 4 564 992 A1**
(43) Date of publication of application: **04.06.2025**
(21) Application number: 23846491.1
(22) Date of filing: 25.07.2023
(51) Int. Cl.: H04W 76/18, H04W 84/10, H04W 92/24

(54) **USER EQUIPMENT (UE)**

(30) Priority: 26.07.2022 JP 2022118516
(71) Applicant: Sharp Kabushiki Kaisha, Sakai City, Osaka 590-8522 (JP)
(72) Inventor: CHIBA, Shuichiro, Sakai City, Osaka 590-8522 (JP); SUGAWARA, Yasuo, Sakai City, Osaka 590-8522 (JP); KUGE, Yoko, Sakai City, Osaka 590-8522 (JP)
(74) Representative: Müller-Boré & Partner Patentanwälte PartG mbB
(86) International application number: PCT/JP2023/027104
(87) International publication number: WO 2024/024761

(57) **Abstract**

A UE includes a transmission and/or reception unit, a controller, and a storage unit. In a case that the UE operates in a Stand-alone Non-public Network (SNPN) access operation mode, the storage unit stores a first counter, the first counter being an SNPN-specific attempt counter for non-3GPP access, and the first counter being further used in a case of direct connection to the SNPN over the non-3GPP access, and the controller increments the first counter in a case that the transmission and/or reception unit receives first control information over the non-3GPP access, and the first control information being a reject cause value indicating that an N1 mode is not allowed, or that 5GCN connection over the non-3GPP access is not allowed, or temporarily not allowed for the SNPN, or permanently not allowed for the SNPN, and the first control information being further included in a registration reject message that is not integrity protected or a service reject message that is not integrity protected.

## Description

### Technical Field

The present invention relates to a User Equipment (UE).

### Background Art

In the 3rd Generation Partnership Project (3GPP), studies, discussions, and specification formulation work are underway to support new procedures and new functions in a system architecture of a 5G System (5GS), which is a fifth Generation (5th Generation, 5G) mobile communication system (see NPLs 1 to 4). For a Non-Public Network (NPN) discussed in the Release 17 standard and preceding releases, function extension of the NBN is further being discussed in Release 18.

### Citation List

### Non Patent Literature

NPL 1: 3GPP TS 23.501 V17.5.0 (2022-06); 3rd Generation Partnership Project; Technical Specification Group Services and System Aspects; System Architecture for the 5G System; Stage 2 (Release 17)
NPL 2: 3GPP TS 23.502 V17.5.0 (2022-06); 3rd Generation Partnership Project; Technical Specification Group Services and System Aspects; Procedures for the 5G System; Stage 2 (Release 17)
NPL 3: 3GPP TS 24.501 V17.7.1 (2022-06); 3rd Generation Partnership Project; Technical Specification Group Core Network and Terminals; Non-Access-Stratum (NAS) protocol for 5G System (5GS); Stage 3 (Release 17)
NPL 4: 3GPP TR 23.700-08 V1.0.0 (2022-05); 3rd Generation Partnership Project; Technical Specification Group Services and System Aspects; Study on enhanced support of Non-Public Networks; Phase 2 (Release 18)

### Summary of Invention

### Technical Problem

For the 5G System (5GS), a 5G Core Network (5GCN) which is a new core network has been studied for the purpose of providing various services. At present, for 5GS, functional extension is studied for the NPN (Non-Public Network), which has hitherto been studied and which is a non-public network that can be connected and used by specific users (see NPL 4).

For connection by a User Equipment (UE) to a Stand-alone Non-public Network (SNPN), which is a form of the NPN, or to an SNPN service over non-3GPP access, only connection via a Public Land Mobile Network (PLMN) and/or a Data Network (DN) is supported in the related art. On the other hand, as the connection to the SNPN or the SNPN service over non-3GPP access, the study of the extension of the NPN includes, in addition to the conventional connection methods, the support of the direct connection to the SNPN or the SNPN service over non-3GPP access. However, for connection to the SNPN service via a conventional PLMN, the details of conditions, procedures, and techniques for handling an attempt counter and/or an event counter are not clarified.

The present invention has been made in view of the above circumstances, and provides a method and a procedure for appropriately maintaining and processing an attempt counter or an event counter in connection by a UE to the SNPN via the PLMN and direct connection over non-3GPP access, which is under study, and information and a procedure transmitted and/or received between the UE and the network required for performing the method and the procedure.

### Solution to Problem

According to an embodiment of the present invention, a user equipment (UE) includes a transmission and/or reception unit, a controller, and a storage unit, wherein in a case that the UE operates in a Stand-alone Non-public Network (SNPN) access operation mode, the storage unit stores a first counter, the first counter being an SNPN-specific attempt counter for non-3 GPP access, and the first counter being further used in a case of direct connection to the SNPN over the non-3GPP access, and the controller increments the first counter in a case that the transmission and/or reception unit receives first control information over the non-3GPP access, the first control information being a reject cause value indicating that an N1 mode is not allowed, or that 5GCN connection over the non-3GPP access is not allowed, or temporarily not allowed for the SNPN, or permanently not allowed for the SNPN, and the first control information being further included in a registration reject message that is not integrity protected or a service reject message that is not integrity protected.

### Advantageous Effects of Invention

According to an embodiment of the present invention, for connection to the SNPN via a PLMN and a direct connection over non-3GPP access, which are classified as connection over non-3GPP access, a technique can be provided by which a UE maintains and/or processes an attempt counter or an event counter according to a connection form.

### Brief Description of Drawings

FIG. 1 is a diagram illustrating an overview of a mobile communication system.
FIG. 2 is a diagram illustrating a detailed configuration of the mobile communication system.
FIG. 3 is a diagram illustrating an apparatus configuration of a UE.
FIG. 4 is a diagram illustrating a configuration of an access network apparatus (gNB) in the 5GS.
FIG. 5 is a diagram illustrating a configuration of a core network apparatus (AMF/SMF/UPF/N3IWF) in the 5GS.
FIG. 6 is a diagram illustrating a registration procedure.

### Description of Embodiments

Preferred embodiments for carrying out the present invention will be described below with reference to the drawings. Note that an embodiment of a mobile communication system to which the present invention is applied will be described as an example in the present embodiment.

### 1. Overview of System

Now, a mobile communication system will be described.

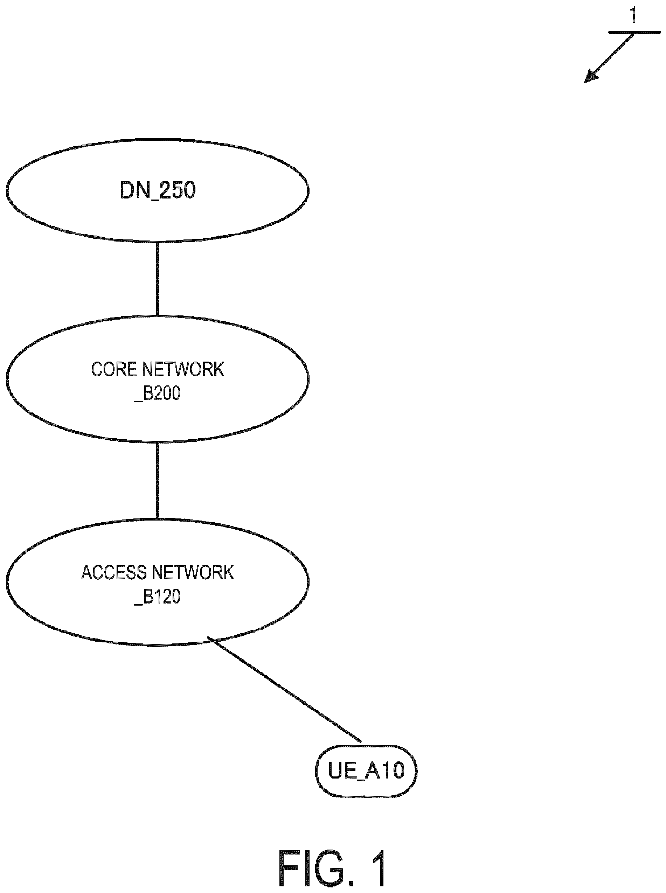

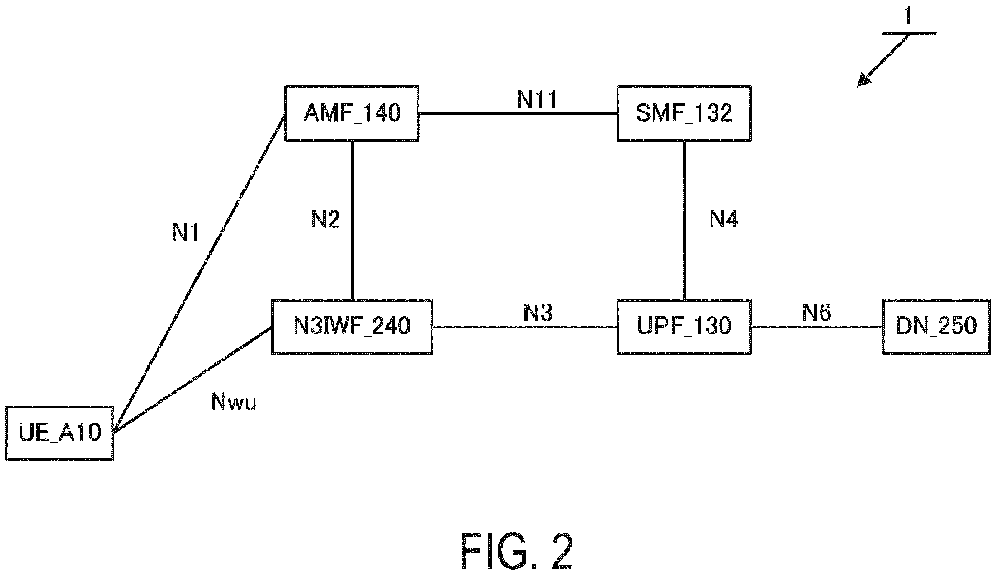

First, FIG. 1 is a diagram illustrating an overview of a mobile communication system 1 used in each embodiment, and FIG. 2 is a diagram illustrating a detailed configuration of the mobile communication system 1.

FIG. 1 illustrates that the mobile communication system 1 includes a User Equipment (UE)_10, an access network_B 120, a core network_B 200, and a Data Network (DN)_250.

Here, these symbols may be omitted in the following description. Although the access network_B 120 of FIG. 1 may refer to 3GPP access or non-3GPP access, the present specification assumes that the access network_B 120 is non-3GPP access unless otherwise noted. In the communication system 1 of FIG. 1, the UE is assumed to be directly connected to an SNPN service (hereinafter also referred to as a service provided by the SNPN, the SNPN service, or simply the SNPN) over non-3GPP access. In other words, in a case that the UE is directly connected to the SNPN service, the UE enters a registered state by performing a registration procedure on the core network_B 200 over non-3GPP access (access network_B 120) in the SNPN, and then enters a communicable state with the DN_250 by using a PDU session (hereinafter also referred to as a first PDU session) established by performing a PDU session establishment procedure. In this case, the UE may be said to be in a state of being connected to the SNPN service. The access network_B 120 and/or the core network_B 200 and/or the DN_250 are said to be networks that constitute the SNPN. Apparatuses and network functions included in the access network_B 120, the core network_B 200, and the DN_250 may also be said to be apparatus and network functions that constitute the SNPN. The communication system 1 is a communication system as described above.

FIG. 2 also illustrates apparatus and network functions such as UE_A 10, AMF_140, SMF_132, UPF_130, N3IWF_240, DN_250, and the like, and interfaces for connecting the functions to one another.

Here, these symbols may be omitted in the following description. The AMF, SMF, UPF, and N3IWF may be included in the core network_B 200. Although not illustrated in FIG. 2, a base station apparatus or an access point is installed between the UE and the N3IWF. The base station apparatus or the access point may be included in an access network.

A 5G System (5GS) that is a 5G system includes the UE, the access network_B, and the core network_B and may further include the DN. The core network_B may be a PLMN, or may be a Stand-alone Non-Public Network (SNPN) or Public Network Integrated Non-Public Network (PNI-NPN). Furthermore, the access network_B may be a non-3GPP access network connected to the SNPN.

The UE is an apparatus that can be connected to a network service over 3GPP access (also referred to as a 3GPP access network or a 3GPP AN) and/or non-3GPP access (also referred to as a non-3GPP access network or a non-3GPP AN). The UE may be a terminal apparatus which can perform wireless communication such as a mobile phone or a smartphone, and may be a terminal apparatus that can connect to an Evolved Packet System (EPS) corresponding to a 4G system as well as to a 5GS. The UE may include a Universal Integrated Circuit Card (UICC) and an Embedded UICC (eUICC). Note that the UE may be referred to as user equipment or a terminal apparatus. Furthermore, the UE may be a Mobile Equipment (ME).

In addition, the access network_B corresponds to a 5G access network (5G AN). The 5G AN includes an NG Radio Access Network (NG-RAN) and/or a non-3GPP access network. One or multiple NR Node Bs (gNBs) 122 are deployed on the NG-RAN. Note that, in the following description, the reference numeral of the gNB 122 may be omitted, as in eNB. The gNB is a node that provides a New Radio (NR) user plane and control plane to the UE, and is connected to a 5GCN via an NG interface (including an N2 interface or an N3 interface). In other words, the gNB is a base station apparatus newly designed for the 5GS and has functions different from those of the base station apparatus (eNB) used in the EPS that is a 4G system. In addition, in a case that there are multiple gNBs, the gNBs are connected to each other via, for example, an Xn interface.

In addition, a non-3GPP access network may be an untrusted non-3GPP access network or a trusted non-3GPP access network. Here, the untrusted non-3GPP access network may be a non-3GPP access network that does not manage security on the access network, for example, a public wireless LAN. On the other hand, the trusted non-3GPP access network may also be referred to as a Trusted Non-3GPP Access Network (TNAN) and may include a trusted non-3GPP access point (TNAP) and a trusted non-3GPP Gateway function (TNGF).

The NG-RAN may hereinafter be referred to as the 3GPP access. In addition, the wireless LAN access network and the non-3GPP AN may be referred to as non-3GPP access. In addition, nodes deployed on the access network_B may also be collectively referred to as NG-RAN nodes.

The access network_B and/or an apparatus included in the access network_B may be referred to as an access network or an access network apparatus.

In addition, the core network_B corresponds to a 5G Core Network (5GCN). An Access and Mobility Management Function (AMF), a User Plane Function (UPF), a Session Management Function (SMF), a Policy Control Function (PCF), a Unified Data Management (UDM), and the like are deployed on the 5GCN. Here, the 5GCN may be referred to as a 5GC.

In the following description, the core network_B and an apparatus included in the core network_B, may be referred to as a core network, a core network apparatus, or an intra-core network apparatus.

The core network (the core network_B) may refer to an IP mobile communication network operated by a mobile communication (Mobile Network Operator (MNO)) connecting the access network (the access network_B) and the PDN and/or the DN, a core network for a mobile communication operator that operates and manages the mobile communication system 1, or a core network for a virtual mobile communication operator and a virtual mobile communication service provider such as a Mobile Virtual Network Operator (MVNO) and a Mobile Virtual Network Enabler (MVNE).

The core network (the core network_B) and the access network (the access network_B) may differ for each mobile communication operator.

The DN may be configured as a packet data service network or configured for each service. Furthermore, the DN may include a connected communication terminal. Thus, connecting with the DN may be connecting with a communication terminal or a server apparatus deployed in the DN. Furthermore, transmission and/or reception of user data to and/or from the DN may be transmission and/or reception of the user data to and/or from a communication terminal or a server apparatus deployed in the DN.

Hereinafter, at least a portion of the access network_B, the core network_B, or the DN, and/or one or more apparatuses included in these networks may be referred to as a network or network apparatus. Specifically, the expression "the network and/or the network apparatus transmits and/or receives a message and/or performs a procedure" signifies that "at least a portion of the access network_B, the core network_B, or the DN, and/or one or more apparatuses included in these networks transmits and/or receives a message and/or performs a procedure".

In addition, the UE can be connected to the access network. In addition, the UE can be connected to the core network over the access network. Furthermore, the UE can connect to the DN via the access network and the core network. In other words, the UE can transmit and/or receive (communicate) user data to and/or from the DN. In a case that user data is transmitted and/or received, not only Internet Protocol (IP) communication but also non-IP communication may be used.

Here, IP communication refers to data communication using an IP, and data is transmitted and/or received using IP packets. Each IP packet includes an IP header and a payload part. In the payload part, data transmitted and/or received by the apparatuses and functions included in the EPS and the apparatuses and functions included in the 5GS may be included. In addition, non-IP communication refers to data communication performed using no IP, in which data is transmitted and/or received in a form different from the structure of an IP packet. For example, non-IP communication may be data communication implemented through transmission and/or reception of application data to which an IP header is not added, or user data transmitted and/or received by the UE may be transmitted and/or received with another header such as a MAC header and an Ethernet (trade name) frame header added.

In addition, the access network_B, the core network_B, and the DN may include an apparatus which is not illustrated in FIG. 2. For example, the core network_B and/or the DN may include an Authentication Server Function (AUSF) and an Authentication, authorization, and accounting (AAA) server (AAA-S). The AAA server may be deployed outside the core network.

Here, the AUSF is a core network apparatus provided with an authentication function for 3GPP access and non-3GPP access. Specifically, the AUSF is a network function unit that receives an authentication request for 3GPP access and/or non-3GPP access from the UE and performs an authentication procedure.

Also, the AAA server is an apparatus that is connected directly to the AUSF or indirectly to the AUSF via another network apparatus and has authentication, approval, and billing functions. The AAA server may be a network apparatus within the core network. Note that the AAA server may not be included in the core network_B but may be included in a PLMN or an SNPN. In other words, the AAA server may be a core network apparatus or may be an apparatus outside the core network. For example, the AAA server may be a server apparatus within the PLMN or SNPN managed by a third party.

Note that, although each of the apparatuses and functions is illustrated one by one for simplicity in FIG. 2, multiple similar apparatuses and functions may be included in the mobile communication system 1. Specifically, apparatuses and functions such as multiple pieces of UEs 10, 5G ANs 120, AMFs 140, UPFs 130, SMFs 132, PCFs 160, UDMs 150, and/or the like may be included in the mobile communication system 1.

### 2. Configuration of Each Apparatus

Next, a configuration of each apparatus (the UE, and/or the access network apparatus, and/or the core network apparatus) used in each embodiment will be described with reference to the drawings. Note that each apparatus may be configured as physical hardware, may be configured as logical (virtual) hardware configured in general-purpose hardware, or may be configured as software. At least a part (including all) of the functions of each apparatus may be configured as physical hardware, logical hardware, or software.

Note that each storage unit (a storage unit_A 340, a storage unit_A 440, a storage unit_B 540, a storage unit_A 640, and a storage unit_B 740) in each apparatus and function to be described later includes, for example, a semiconductor memory, a Solid State Drive (SSD), a Hard Disk Drive (HDD), or the like. In addition, each storage unit can store not only information originally configured at the time of being shipped, but also various pieces of information transmitted and/or received to and/or from apparatuses and functions (for example, the UE, and/or the access network apparatus, and/or the core network apparatus, and/or the PDN, and/or the DN) other than the apparatus and functions of each storage unit. In addition, each storage unit can store identification information, control information, flags, parameters, and the like included in a control message transmitted and/or received in various communication procedures to be described later. In addition, each storage unit may store these pieces of information for each UE. In addition, in a case that each storage unit performs interworking between the 5GS and the EPS, each storage unit can store a control message and user data transmitted and/or received to and/or from the apparatuses and functions included in the 5GS and/or the EPS. In this case, not only data transmitted and/or received over the N26 interface but also data transmitted and/or received without using the N26 interface can be stored.

### 2.1. Apparatus Configuration of UE

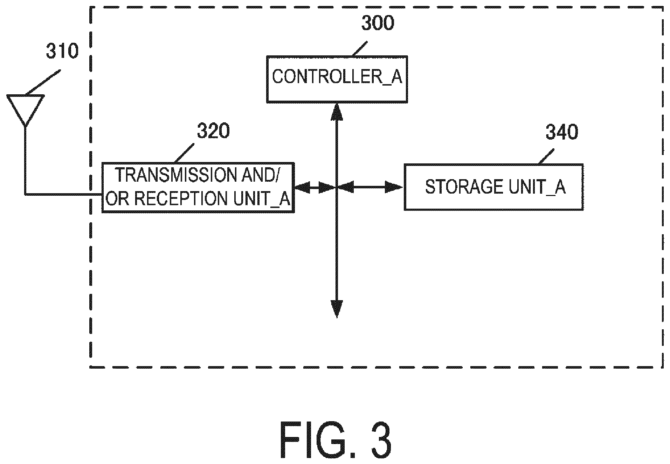

First, an apparatus configuration example of the User Equipment (UE) will be described with reference to FIG. 3. The UE includes a controller_A 300, an antenna 310, a transmission and/or reception unit_A 320, and a storage unit_A 340. The controller_A 300, the transmission and/or reception unit_A 320, and the storage unit_A 340 are connected via a bus. The transmission and/or reception unit_A 320 is connected to the antenna 310.

The controller_A 300 is a function unit that controls overall operations and functions of the UE. The controller_A 300 reads and performs various programs stored in the storage unit_A 340 as necessary, and thereby implements various types of processing in the UE.

The transmission and/or reception unit_A 320 is a function unit that performs radio communication with a base station apparatus (the eNB or the gNB) within the access network via the antenna. In other words, with the use of the transmission and/or reception unit_A 320, the UE can transmit and/or receive user data and/or control information to and/or from the access network apparatus, and/or the core network apparatus, and/or the PDN, and/or the DN.

To provide detailed description with reference to FIG. 2, by using the transmission and/or reception unit_A 320, the UE can communicate with the base station apparatus (eNB) within the E-UTRAN over an LTE-Uu interface. In addition, the UE can communicate with the base station apparatus (gNB) within the 5G AN with the use of the transmission and/or reception unit_A 320. In addition, the UE can transmit and/or receive a Non-Access-Stratum (NAS) message to and/or from the AMF over an N1 interface with the use of the transmission and/or reception unit_A 320. However, the N1 interface is a logical interface, and thus communication between the UE and the AMF is actually performed over the 5G AN.

The storage unit_A 340 is a function unit that stores programs, user data, control information, and the like necessary for each operation of the UE.

### 2.1.1 Apparatus Configuration of gNB

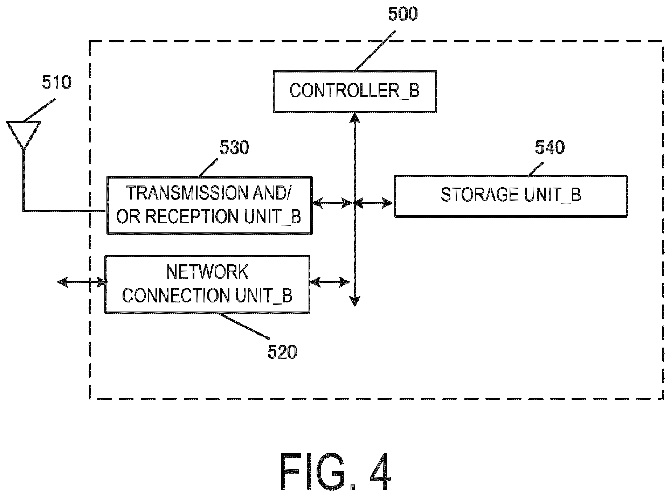

Next, an apparatus configuration example of the gNB will be described with reference to FIG. 4. The gNB includes a controller_B 500, an antenna 510, a network connection unit_B 520, a transmission and/or reception unit_B 530, and a storage unit_B 540. The controller_B 500, the network connection unit_B 520, the transmission and/or reception unit_B 530, and the storage unit_B 540 are connected via a bus. The transmission and/or reception unit_B 530 is connected to the antenna 510.

The controller_B 500 is a function unit that controls overall operations and functions of the gNB. The controller_B 500 reads and performs various programs stored in the storage unit_B 540 as necessary, and thereby implements various types of processing in the gNB.

The network connection unit_B 520 is a function unit for the gNB to communicate with the AMF and/or the UPF. In other words, with the use of the network connection unit_B 520, the gNB can transmit and/or receive user data and/or control information to and/or from the AMF and/or the UPF.

The transmission and/or reception unit_B 530 is a function unit that performs radio communication with the UE via the antenna 510. In other words, with the use of the transmission and/or reception unit_B 530, the gNB can transmit and/or receive user data and/or control information to and/or from the UE.

To provide detailed description with reference to FIG. 2, by using the network connection unit_B 520, the gNB within the 5G AN can communicate with the AMF over the N2 interface and can communicate with the UPF over the N3 interface. In addition, the gNB can communicate with the UE with the use of the transmission and/or reception unit_B 530.

The storage unit_B 540 is a function unit that stores programs, user data, control information, and the like necessary for each operation of the gNB.

### 2.1.2. Apparatus Configuration of AMF

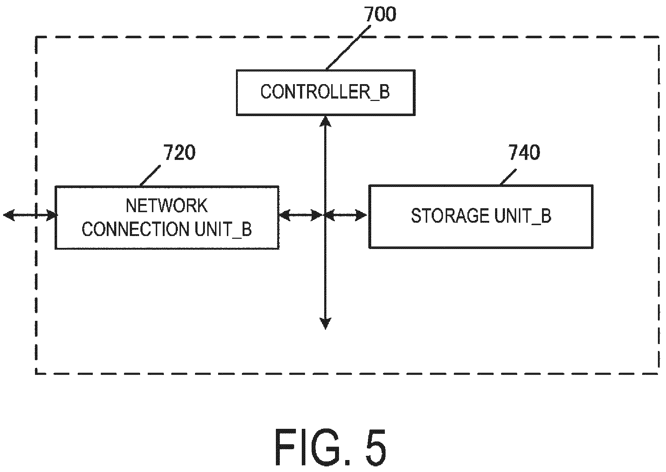

Next, an apparatus configuration example of the AMF will be described with reference to FIG. 5. The AMF includes a controller_B 700, a network connection unit_B 720, and a storage unit_B 740. The controller_B 700, the network connection unit_B 720, and the storage unit_B 740 are connected via a bus. The AMF may be a node that handles a control plane.

The controller_B 700 is a function unit that controls overall operations and functions of the AMF. The controller_B 700 reads and performs various programs stored in the storage unit_B 740 as necessary, and thereby implements various types of processing in the AMF.

The network connection unit_B 720 is a function unit for the AMF to connect to the base station apparatus (gNB) within the 5G AN, and/or the SMF, and/or the PCF, and/or the UDM, and/or an SCEF. In other words, with the use of the network connection unit_B 720, the AMF can transmit and/or receive user data and/or control information to and/or from the base station apparatus (gNB) in the 5G AN, and/or the SMF, and/or the PCF, and/or the UDM, and/or the SCEF. In other words, the network connection unit_B 720 may be a transmission and/or reception unit for transmitting and/or receiving user data and/or control information.

To provide detailed description with reference to FIG. 2, by using a network connection unit_A 620, the AMF within the 5GCN can communicate with the gNB over the N2 interface, can communicate with the UDM over an N8 interface, can communicate with the SMF over an N11 interface, and can communicate with the PCF over an N15 interface. In addition, the AMF can transmit and/or receive a NAS message to and/or from the UE over the N1 interface with the use of the network connection unit_A 620. However, the N1 interface is a logical interface, and thus communication between the UE and the AMF is actually performed via the access network_B, or the non-3GPP AN, or the 5G AN.

The storage unit_B 740 is a function unit that stores programs, user data, control information, and the like necessary for each operation of the AMF.

Note that the AMF has a function of exchanging a control message with the RAN using the N2 interface, a function of exchanging a NAS message with the UE using the N1 interface, a function of performing encryption and integrity protection of a NAS message, a Registration management (RM) function, a Connection management (CM) function, a Reachability management function, a Mobility management function for the UE or the like, a function of transferring a Session Management (SM) message between the UE and the SMF, an Access Authentication (Access Authorization) function, a security anchor function (Security Anchor Functionality (SEA)), a Security Context Management (SCM) function, a function of supporting the N2 interface for a Non-3GPP Interworking Function (N3IWF), a function of supporting transmission and/or reception of a NAS signal to an/or from the UE via the N3IWF, a function of authenticating the UE connected via the N3IWF, and the like.

In addition, in registration management, an RM state for each UE is managed. The RM state may be synchronized between the UE and the AMF. The RM state includes a deregistered state (RM-DEREGISTERED state) and a registered state (RM-REGISTERED state). In the RM-DEREGISTERED state, because the UE is not registered with the network, the AMF is in a state of being unable to reach the UE, because a UE context in the AMF does not have location information and routing information that are valid for the UE. In addition, in the RM-REGISTERED state, because the UE is registered in the network, the UE can receive a service that requires registration with the network. Note that the RM state may be referred to as a 5GMM state. In this case, the RM-DEREGISTERED state may be referred to as a 5GMM-DEREGISTERED state, and the RM-REGISTERED state may be referred to as a 5GMM-REGISTERED state.

In other words, 5GMM-REGISTERED may be a state in which each apparatus establishes a 5GMM context, or may be a state in which each apparatus establishes a PDU session context. Note that, in a case that each apparatus is in 5GMM-REGISTERED, the UE_A 10 may start transmission and/or reception of user data and a control message, or may respond to paging. Furthermore, note that, in a case that each apparatus is in 5GMM-REGISTERED, the UE_A 10 may perform a registration procedure other than a registration procedure for initial registration, and/or a service request procedure.

In addition, 5GMM-DEREGISTERED may be a state in which each apparatus does not establish the 5GMM context, may be a state in which the location information of the UE_A 10 is not known to the network, or may be a state in which the network is unable to reach the UE_A 10. Note that, in a case that each apparatus is in 5GMM-DEREGISTERED, the UE_A 10 may initiate the registration procedure, or may perform the registration procedure to thereby establish the 5GMM context.

In addition, in connection management, a CM state for each UE is managed. The CM state may be synchronized between the UE and the AMF. The CM state includes a non-connected state (CM-IDLE state) and a connected state (CM-CONNECTED state). In the CM-IDLE state, the UE is in the RM-REGISTERED state, but does not have NAS signaling connection established with the AMF via the N1 interface. In addition, in the CM-IDLE state, the UE has neither connection of the N2 interface (N2 connection) nor connection of the N3 interface (N3 connection). On the other hand, in the CM-CONNECTED state, the UE has NAS signaling connection established with the AMF via the N1 interface. In addition, in the CM-CONNECTED state, the UE may have connection of the N2 interface (N2 connection) and/or connection of the N3 interface (N3 connection).

Furthermore, in connection management, management may be performed separately for the CM state in 3GPP access and the CM state in non-3GPP access. In this case, the CM state in 3GPP access may include a non-connected state in 3GPP access (CM-IDLE state over 3GPP access) and a connected state in 3GPP access (CM-CONNECTED state over 3GPP access). Furthermore, the CM state in non-3GPP access may include a non-connected state in non-3GPP access (CM-IDLE state over non-3GPP access) and a connected state in non-3GPP access (CM-CONNECTED state over non-3GPP access). Note that the non-connected state may be referred to as an idle mode, and a connected state mode may be referred to as a connected mode.

Note that the CM state may be referred to as a 5GMM mode. In this case, the non-connected state may be referred to as a 5GMM non-connected mode (5GMM-IDLE mode), and the connected state may be referred to as a 5GMM connected mode (5GMM-CONNECTED mode). In addition, the non-connected state in 3GPP access may be referred to as a 5GMM non-connected mode in 3GPP access (5GMM-IDLE mode over 3GPP access), and the connected state in 3GPP access may be referred to as a 5GMM connected mode in 3GPP access (5GMM-CONNECTED mode over 3GPP access). In addition, the non-connected state in non-3GPP access may be referred to as a 5GMM non-connected mode in non-3GPP access (5GMM-IDLE mode over non-3GPP access), and the connected state in non-3GPP access may be referred to as a 5GMM connected mode in non-3GPP access (5GMM-CONNECTED mode over non-3GPP access). Note that the 5GMM non-connected mode may be referred to as an idle mode, and the 5GMM connected mode may be referred to as a connected mode.

In addition, one or multiple AMFs may be deployed within the core network_B. In addition, the AMF may be an NF that manages one or multiple Network Slice Instances (NSIs). In addition, the AMF may be a common CP function (Common Control Plane Network Function (CPNF)(CCNF)) shared among multiple NSIs.

Note that, in a case that the UE connects to the 5GS over non-3GPP access, the N3IWF is an apparatus and/or a function deployed between non-3GPP access and the 5GCN.

### 2.1.3. Apparatus Configuration of SMF

Next, an apparatus configuration example of the SMF 132 will be described by using FIG. 5. The SMF includes a controller_B 700, a network connection unit_B 720, and a storage unit_B 740. The controller_B 700, the network connection unit_B 720, and the storage unit_B 740 are connected via a bus. The SMF may be a node that handles the control plane.

The controller_B 700 is a function unit that controls overall operations and functions of the SMF. The controller_B 700 reads and performs various programs stored in the storage unit_B 740 as necessary, and thereby implements various types of processing in the SMF.

The network connection unit_B 720 is a function unit for the SMF to connect to the AMF, and/or the UPF, and/or the PCF, and/or the UDM. In other words, with the use of the network connection unit_B 720, the SMF can transmit and/or receive user data and/or control information to and/or from the AMF, and/or the UPF, and/or the PCF, and/or the UDM.

To provide detailed description with reference to FIG. 2, by using of the network connection unit_A 620, the SMF in the 5GCN can communicate with the AMF over the N11 interface, can communicate with the UPF over the N4 interface, can communicate with the PCF over an N7 interface, and can communicate with the UDM over an N10 interface.

The storage unit_B 740 is a function unit that stores programs, user data, control information, and the like necessary for each operation of the SMF.

The SMF has a Session Management function for managing establishment, modification, and release of a PDU session, a function of IP address allocation to the UE and management thereof, a function of selection and control of the UPF, a function of configuring the UPF for routing traffic to an appropriate destination (transmission destination), a function of transmitting and/or receiving an SM part of a NAS message, a function of providing notification of arrival of downlink data (Downlink Data Notification), a function of providing SM information specific to an AN (for each AN) that is transmitted to the AN through the AMF over the N2 interface, a function of determining a Session and Service Continuity mode (SSC mode) for a session, a roaming function, and the like.

### 2.1.4 Apparatus Configuration of UPF

Next, an apparatus configuration example of the UPF will be described with reference to FIG. 5. The UPF includes a controller_B 700, a network connection unit_B 720, and a storage unit_B 740. The controller_B 700, the network connection unit_B 720, and the storage unit_B 740 are connected via a bus. The UPF may be a node that handles the control plane.

The controller_B 700 is a function unit that controls overall operations and functions of the UPF. The controller_B 700 reads and performs various programs stored in the storage unit_B 740 as necessary, and thereby implements various types of processing in the UPF.

The network connection unit_B 720 is a function unit for the UPF to connect to the base station apparatus (gNB) within the 5G AN, and/or the SMF, and/or the DN. In other words, with the use of the network connection unit_B 720, the UPF can transmit and/or receive user data and/or control information to and/or from the base station apparatus (gNB) within the 5G AN, and/or the SMF, and/or the DN.

To provide detailed description with reference to FIG. 2, by using the network connection unit_A 620, the UPF within the 5GCN can communicate with the gNB over the N3 interface, can communicate with the SMF over the N4 interface, can communicate with the DN over an N6 interface, and can communicate with another UPF over an N9 interface.

The storage unit_B 740 is a function unit that stores programs, user data, control information, and the like necessary for each operation of the UPF.

The UPF has a function as an anchor point for intra-RAT mobility or inter-RAT mobility, a function as an external PDU session point to be mutually connected with the DN (that is, a function of transferring user data as a gateway between the DN and the core network_B), a function of routing and transferring packets, an Uplink Classifier (UL CL) function of supporting routing of multiple traffic flows for one DN, a Branching point function of supporting a multi-homed PDU session, a Quality of Service (QoS) processing function for the user plane, a function of verifying uplink traffic, a function of triggering buffering of downlink packets and Downlink Data Notification, and the like.

In addition, the UPF may be a gateway for IP communication and/or non-IP communication. In addition, the UPF may have a function of transferring IP communication, or a function of conversion between non-IP communication and IP communication. Furthermore, multiple deployed gateways may be gateways for connecting the core network_B and a single DN. Note that the UPF may have connectivity with another NF, and may be connected to each apparatus via another NF.

Note that a user plane refers to user data that is transmitted and/or received between the UE and a network. The user plane may be transmitted and/or received by using the PDU session. Furthermore, in a case of the 5GS, the user plane may be transmitted and/or received over the interface between the UE and the NG RAN, and/or the N3 interface, and/or the N9 interface, and/or the N6 interface. The user plane may be hereinafter referred to as a U-Plane or UP.

In addition, a control plane refers to a control message that is transmitted and/or received in order to perform communication control of the UE or the like. In the 5GS, the control plane may be transmitted and/or received using the interface between the UE and the NG RAN or each apparatus for non-3GPP access, and the N2 interface. The control plane may be hereinafter referred to as a control plane, or may be hereinafter referred to as a C-Plane.

Furthermore, the U-Plane (User Plane (UP)) may be a communication path for transmitting and/or receiving user data, and may include multiple bearers. Furthermore, the C-Plane (Control Plane (CP)) may be a communication path for transmitting and/or receiving a control message, and may include multiple bearers.

### 2.1.5 Apparatus Configuration of N3IWF

Now, an example of the apparatus/function configuration of the N3IWF used in each embodiment will be described with reference to FIG. 5. The N3IWF is deployed in the core network in a case that the UE is connected to the 5GS via untrusted non non-3GPP Access (Untrusted non-3GPP Access). The N3IWF includes a controller_700, a network connection unit_720, and a storage unit_740. The controller_700, the network connection unit_720, and the storage unit_740 are connected via a bus.

The controller_700 is a function unit for controlling the operation and function of the entire N3IWF. Note that the controller_500 may process all of the functions that are not included in the functions of the other function units of the N3IWF (the network connection unit_720 and the storage unit_740). The controller_700 implements various processing operations in the N3IWF by reading out and performing, as necessary, various programs stored in the storage unit_740.

The network connection unit_720 is a function unit through which the N3IWF communicates with the base station apparatus or the access point and/or the AMF and/or the UPF. That is, the N3IWF can transmit and/or receive control information and/or user data to and from the base station apparatus or the access point by using the network connection unit_720. The N3IWF can transmit and/or receive control information and/or user data to and/or from the AMF and/or the UPF and the like by using the network connection unit_720.

In other words, the N3IWF can communicate with the base station apparatus or the access point via the Y2 interface by using the network connection unit_720. The N3IWF can communicate with the AMF via the N2 interface. The N3IWF can communicate with the UPF via the N3 interface.

Note that the above description contains only the communication between the N3IWF and the representative apparatuses/functions and that the N3IWF can of course communicate with apparatuses/functions other than those described above, i.e., core network apparatuses other than those described above.

The storage unit_740 is a function unit for storing programs, user data, control information, and the like necessary for each operation of the N3IWF.

Note that the N3IWF includes a function to establish an IPsec tunnel with the UE, a function to terminate the N2 interface for the control plane, a function to terminate the N3 interface for the user plane, a function to relay NAS signalling between the UE and the AMF, a function to process N2 signalling from the SMF for the PDU session or QoS, a function to establish IPsec Security Association (SA) in order to support traffic for the PDU session, a function to relay user plane packets between the UE and the UPF (including a function to encapsulate/decapsulate packets for IPsec and an N3 tunnel), a function to serve as a local mobility anchor in the untrusted non-3GPP access network, a function to select the AMF, and the like. These functions are all controlled by the controller_700.

### 2.1.6. Description of Other Apparatuses and/or Functions

Next, other apparatuses and/or functions will be described.

The Trusted Non-3GPP Access Network (TNAN) may be an access network for providing connection to the UE via trusted non non-3GPP access, and may include a Trusted Non-3GPP Access Point (TNAP) and a Trusted Non-3GPP Gateway Function (TNGF).

The PCF has a function such as a function of providing policy rules. The PVF is connected to the AMF and the SMF and has a function such as a function of performing QoS management for data delivery. For example, the PCF performs, for example, QoS management for a communication path between the UE_A 10 and the PDN. The PCF may also be an apparatus that creates and/or manages a Policy and Charging Control (PCC) rule and/or a routing rule that each apparatus uses in a case of transmitting and/or receiving user data.

The UDM includes an authentication credential processing function, a user identification processing function, an access authentication function, a registration/mobility management function, a subscriber information management function, and the like.

### 2.2. Description of Terms in Present Embodiment

Now, highly technical terms and identification information used in procedures which will be used in the embodiments will be described.

A network (NW) refers to at least some of the access network_B, the core network_B, and the DN. One or multiple apparatuses included in at least a part of the access network_B, the core network_B, and the DN may be referred to as a network or a network apparatus. In other words, "a network transmits and/or receives a message and/or performs processing" may mean "an apparatus (a network apparatus and/or a control apparatus) in the network transmits and/or receives the message and/or performs the processing". Conversely, "an apparatus in a network transmits and/or receives a message and/or performs processing" may mean "the network transmits and/or receives the message and/or performs the processing".

A network may also refer to a Public Land Mobile Network (PLMN), or refer to a Non-Public Network (NPN), or refer to a Stand-alone Non-Public Network (SNPN). In a case that it is stated that the UE performs a network selection, this may indicate that the UE performs a PLMN selection or may indicate that the UE performs an SNPN selection. Note that in the present specification, the access network, the core network, the PLMN, and the SNPN are also each referred to as a network or an NW.

A Session Management (SM) message (also referred to as a Non-Access-Stratum (NAS) SM message) may be a NAS message used in a procedure for SM or may be a control message transmitted and/or received between the UE_A 10 and the SMF_132 via the AMF_140. Furthermore, the SM message may include a PDU session establishment request message, a PDU session establishment accept message, a PDU session reject message (PDU session establishment reject message), a PDU session modification request message, a PDU session modification command message, a PDU session modification completion message (PDU session modification complete), a PDU session modification command reject message, a PDU session modification reject message, a PDU session release request message, a PDU session release reject message, a PDU session release command message, a PDU session release complete message, and the like. The procedure for SM or the SM procedure may include a PDU session establishment procedure, a PDU session modification procedure, and a PDU session release procedure (UE-requested PDU session release procedure). Note that each procedure may be a procedure initiated by the UE or may be a procedure initiated by the NW.

A Mobility management (MM) message (also referred to as a NAS MM message) may be a NAS message used in a procedure for MM, or may be a control message transmitted and/or received between the UE_A 10 and the AMF_140. Furthermore, the MM message may include a Registration request message, a Registration accept message, a Registration reject message, a De-registration request message, a De-registration accept message, a configuration update command message, a configuration update complete message, a Service request message, a Service accept message, a Service reject message, a Notification message, a Notification response message, and the like. The procedure for MM or the MM procedure may include a Registration procedure, a De-registration procedure, a Generic UE configuration update procedure, an authentication and authorization procedure, a Service request procedure, a Paging procedure, and a Notification procedure.

A 5G System (5GS) service may be a connection service provided using the core network_B 200. In addition, the 5GS service may be a service different from an EPS service, or may be a service similar to the EPS service.

A non 5GS service may be a service other than the 5GS service and may include an EPS service and/or a non EPS service.

A Packet Data Network (PDN) type indicates a type of PDN connection and includes IPv4, IPv6, IPv4v6, and non-IP. In a case that IPv4 is specified, it indicates that transmission and/or reception of data is performed using IPv4. In a case that IPv6 is specified, it indicates that transmission and/or reception of data is performed using IPv6. In a case that IPv4v6 is specified, it indicates that transmission and/or reception of data is performed using IPv4 or IPv6. In a case that non-IP is specified, it indicates that communication is performed using a communication method other than the IP, not communication using the IP.

There are two Access types, namely a 3GPP access and a non-3GPP access. Here, it is only necessary for information indicating an access type to be configured as an Access type Information Element (IE), and for example, the information may be identification information indicating an access type to be used in signalling or user data transmission and/or reception between the UE and the core network.

Although a Protocol Data Unit/Packet Data Unit (PDU) session can be defined as a relationship between the DN that provides a PDU connectivity service and the UE, the PDU session may be connectivity established between the UE and an external gateway. In the 5GS, the UE establishes a PDU session via the access network_B and the core network_B, and can thereby perform transmission and/or reception of user data to and/or from the DN by using the PDU session. Here, the external gateway may be a UPF, an SCEF, or the like. The UE can perform transmission and/or reception of user data to and/or from an apparatus deployed in the DN, such as an application server, by using the PDU session.

Note that each apparatus (the UE, and/or the access network apparatus, and/or the core network apparatus) may associate one or multiple pieces of identification information with a PDU session for management. Note that these pieces of identification information may include one or multiple of a DNN, a QoS rule, a PDU session type, application identification information, NSI identification information, access network identification information, and an SSC mode, and may further include other pieces of information. In addition, in a case that multiple PDU sessions are established, pieces of identification information associated with the PDU sessions may have the same or different details.

The PDU session may be used for transmission and/or reception of the SNPN information in remote provisioning via the user plane in the UE onboarding procedure. Note that details of a procedure related to establishment of a PDU session for the onboarding or onboarding service and a procedure of remote provisioning via the user plane will be described later.

The Data Network Name (DNN) may be identification information for identifying the core network and/or an external network such as the DN. In addition, the DNN can also be used as information for selecting a gateway such as the UPF_130 or the like to which the core network_B 200 is connected. In addition, the DNN may correspond to an Access Point Name (APN).

A Protocol Data Unit/Packet Data Unit (PDU) session type indicates a type of PDU session and includes IPv4, IPv6, Ethernet, and Unstructured. In a case that IPv4 is specified, it indicates that transmission and/or reception of data is performed using IPv4. In a case that IPv6 is specified, it indicates that transmission and/or reception of data is performed using IPv6. In a case that Ethernet is specified, it indicates that transmission and/or reception of an Ethernet frame is performed. Alternatively, Ethernet may indicate that communication using the IP is not performed. In a case that Unstructured is specified, it indicates that data is transmitted and/or received to and/or from an application server in the DN or the like by using a Point-to-Point (P2P) tunneling technique. For the P2P tunneling technique, for example, a UDP/IP encapsulation technique may be used. Note that the PDU session type may include the IP, in addition to the above. The IP can be specified in a case that the UE can use both of IPv4 and IPv6.

The Public land mobile network (PLMN) is a communication network that provides mobile radio communication services. The PLMN is a network managed by an operator who is a (mobile) network operator, and the operator can be identified by a PLMN ID. The operator may manage one or multiple PLMNs. Note that in the present document, the PLMN may mean the PLMN ID. A PLMN that matches a Mobile Network Code (MNC) and a Mobile Country Code (MCC) of an International Mobile Subscriber Identity (IMSI) of the UE may be a Home PLMN (HPLMN).

Moreover, the UE may hold, in a Universal Subscriber Identity Module (USIM), an Equivalent HPLMN list for identifying one or multiple Equivalent HPLMNs (E-HPLMNs). The HPLMN and/or a PLMN that is different from the E-HPLMN may be a Visited PLMN (VPLMN, or visiting destination PLMN (VPLMN)). The PLMN that the UE has successfully registered may be a Registered PLMN (RPLMN, registration PLMN). The current PLMN may be a PLMN requested by the UE and/or a PLMN selected by the UE and/or the RPLMN and/or the PLMN allowed by the network and/or the PLMN to which the core network apparatus transmitting and/or receiving messages belongs to. Note that a service provided by the PLMN may be referred to as a PLMN service, and a service provided by an SNPN may be referred to as an SNPN service.

In addition, a network slice (NS) is a logical network that provides specific network capability and network characteristics. The UE and/or the network can support the network slice (NW slice (NS)) in the 5GS. The network slice may be referred to simply as a slice.

In addition, a network slice instance (NSI) includes a set of an instance (entity) of a network function (NF) and necessary resources and forms a network slice to be mapped. Here, the NF is a processing function for a network, and is adopted or defined by the 3GPP. The NSI is an entity of one or multiple NSs configured in the core network_B. In addition, the NSI may include a virtual Network Function (NF) generated using a Network Slice Template (NST).

Here, the NST is associated with a resource request for provision of a requested communication service and capability, and is a logical expression of one or multiple NFs. In other words, the NSI may be a set of multiple NFs on the core network_B 200. The NSI may be a logical network configured for classifying user data to be delivered depending on a service or the like. In the NS, one or multiple NFs may be configured. Each NF configured in the NS may or may not be an apparatus shared with another NS.

The UE and/or the apparatus in the network can be allocated to one or multiple NSs, based on an NSSAI, and/or an S-NSSAI, and/or a UE usage type, and/or registration information such as one or multiple NSI IDs, and/or an APN. Note that the UE usage type is a parameter value included in registration information of the UE, which is used for identifying the NSI. The UE usage type may be stored in the AMF and/or UDM. The AMF may select the SMF 132 and the UPF based on the UE usage type.

In addition, Single Network Slice Selection Assistance Information (S-NSSAI) is information for identifying the NS. The S-NSSAI may include only a Slice/Service type (SST), or may include both of an SST and a Slice Differentiator (SD). Here, the SST is information indicating an operation of the NS expected in terms of functions and services. In addition, the SD may be information for interpolating an SST in a case that one NSI is selected out of multiple NSIs indicated by the SST. The S-NSSAI may be information unique to each PLMN or may be standard information common to the PLMNs. In addition, a network may store one or multiple pieces of S-NSSAI in the registration information of the UE as default S-NSSAI. Note that, in a case that the S-NSSAI is default S-NSSAI and the UE does not transmit, to a network, valid S-NSSAI in a registration request message, the network may provide an NS related to the UE.

In addition, the S-NSSAI transmitted and/or received between the UE and the NW may be referred to as an S-NSSAI Information element (IE). Furthermore, the S-NSSAI IE transmitted and/or received between the UE and the NW may include the S-NSSAI including the SST and/or the SD of the registered PLMN and/or the SST and/or the SD indicating the S-NSSAI of the HPLMN to which the S-NSSAI is mapped. One or multiple pieces of S-NSSAI stored in the UE and/or the NW may include the SST and/or the SD, or include the S-NSSAI including the SST and/or the SD and/or the SST and/or the SD indicating the S-NSSAI of the HPLMN to which the S-NSSAI is mapped.

In addition, the Network Slice Selection Assistance Information (NSSAI) is a set of pieces of the S-NSSAI. Each piece of the S-NSSAI included in the NSSAI is information for assisting the access network or the core network to select an NSI. The UE may store the NSSAI allowed by the network for each PLMN. In addition, the NSSAI may be information used for selecting the AMF. The UE may apply, to the PLMN and the EPLMN, each piece of NSSAI (allowed NSSAI and/or configured NSSAI and/or rejected NSSAI and/or pending NSSAI and/or first NSSAI).

The mapped S-NSSAI is the S-NSSAI of the HPLMN mapped to the S-NSSAI of the registered PLMN in a roaming scenario. The UE may store one or multiple pieces of mapped S-NSSAI mapped to the S-NSSAI included in the configured NSSAI and the allowed NSSAI of each access type. Furthermore, the UE may store one or multiple pieces of mapped S-NSSAI of the S-NSSAI included in the first NSSAI and/or the rejected NSSAI and/or the pending NSSAI.

A Network Slice-Specific Authentication and Authorization (NSSAA) function is a function for implementing network slice-specific authentication and authorization. The network slice-specific authentication and authorization allows the UE to be authenticated and authorized outside the core network, such as in a 3rd Party. The PLMN and the network apparatus having the NSSAA function can perform a NSSAA procedure for a certain S-NSSAI, based on registration information of the UE. Furthermore, the UE having the NSSAA function can manage, store, and transmit and/or receive the pending NSSAI and the third rejected NSSAI. In the present document, NSSAA may be referred to as a network slice-specific authentication and authorization procedure or an authentication and authorization procedure.

The S-NSSAI that requires NSSAA is S-NSSAI that requires NSSAA managed by the core network and/or the core network apparatus. Furthermore, the S-NSSAI requiring the NSSAA may be S-NSSAI other than that of the HPLMN, which is managed by the core network and/or the core network apparatus, and in which the S-NSSAI requiring the NSSAA is the mapped S-NSSAI.

The core network and/or the core network apparatus may store the S-NSSAI that requires NSSAA by associating the S-NSSAI with information indicating whether NSSAA is required. Furthermore, the core network and/or the core network apparatus may store the S-NSSAI requiring the NSSAA in association with information indicating whether NSSAA has completed or information indicating that NSSAA has completed and been allowed or succeeded. The core network and/or the core network apparatus may manage the S-NSSAI requiring NSSAA as information unrelated to the access network.

In addition, configured NSSAI is NSSAI fed and stored in the UE. The UE may store the configured NSSAI for each PLMN. The UE may store the configured NSSAI in association with the PLMN. Note that, in the present application, the configured NSSAI associated with the PLMN may be referred to as configured NSSAI with respect to the PLMN, configured NSSAI of the PLMN, configured NSSAI for the PLMN, or configured NSSAI associated with the PLMN. In addition, the UE may store configured NSSAI that is not associated with the PLMN and is valid for all PLMNs, and such configured NSSAI may be defined as "default configured NSSAI".

The configured NSSAI may be associated with multiple PLMNs, and these multiple PLMNs may be EPLMNs.

The configured NSSAI may be information configured by the network (or PLMN). The S-NSSAI included in the configured NSSAI may be referred to as configured S-NSSAI. The configured S-NSSAI may include S-NSSAI and mapped S-NSSAI. Alternatively, the S-NSSAI of the PLMN may be referred to as "configured S-NSSAI", and the S-NSSAI in which the configured S-NSSAI is mapped to the HPLMN may be referred to as "mapped S-NSSAI with respect to configured NSSAI for the PLMN".

In addition, requested NSSAI is NSSAI provided to the network from the UE during the registration procedure. In the registration procedure, the S-NSSAI included in the requested NSSAI transmitted by the UE may be S-NSSAI included in the allowed NSSAI or the configured NSSAI stored in the UE. In the PDU session establishment procedure, the S-NSSAI included in the requested NSSAI transmitted by the UE may be S-NSSAI included in the allowed NSSAI stored in the UE.

The requested NSSAI may be information indicating a network slice requested by the UE. The S-NSSAI included in the requested NSSAI may be referred to as requested S-NSSAI. For example, the requested NSSAI is included, for transmission, in a Non-Access-Stratum (NAS) message transmitted from the UE to the network, such as a registration request message or a PDU session establishment request message, or in a Radio Resource Control (RRC) message including the NAS message.

In addition, the allowed NSSAI is information indicating one or multiple network slices allowed for the UE. In other words, the allowed NSSAI is information identifying a network slice to which the UE is allowed to connect by the network.

The UE and/or the NW may store and manage the allowed NSSAI for each access (the 3GPP access or the non-3GPP access), as information regarding the UE. The UE and/or the NW may further manage the allowed NSSAI in association with the registration area.

Furthermore, the UE and/or the NW may store and manage the allowed NSSAI in association with the PLMN, as information regarding UE. The allowed NSSAI may be associated with multiple PLMNs, and these multiple PLMNs may be EPLMNs.

Note that in the present document, the allowed NSSAI associated with the PLMN and the access type may be referred to as allowed NSSAI with respect to the PLMN and the access type or allowed NSSAI with respect to the access type of the PLMN. The S-NSSAI included in the allowed NSSAI may be referred to as an allowed S-NSSAI. The allowed S-NSSAI may include S-NSSAI and mapped S-NSSAI.

The rejected NSSAI is information indicating one or multiple network slices not allowed for the UE. In other words, the rejected NSSAI is information identifying a network slice to which the UE is not allowed to connect by the network. The rejected NSSAI may be information including one or multiple combinations of S-NSSAI and a reject cause value.

Here, the reject cause value is information indicating why the network rejects the corresponding S-NSSAI. The UE and the network may each appropriately store and manage the rejected NSSAI based on the reject cause value associated with each piece of S-NSSAI.

Furthermore, the rejected NSSAI may be included in the NAS message transmitted from the network to the UE, such as a registration accept message, a configuration update command, or a registration reject message, or in an RRC message including a NAS message. The S-NSSAI included in the rejected NSSAI may be referred to as rejected S-NSSAI.

The rejected NSSAI may be any of the first to third rejected NSSAI, the pending NSSAI, and the first NSSAI, or a combination thereof. The S-NSSAI included in the rejected NSSAI may be referred to as rejected S-NSSAI. The rejected S-NSSAI may include the S-NSSAI and the mapped S-NSSAI.

The UE and/or the NW may store and manage the rejected NSSAI in association with the PLMN, as information regarding the UE. The rejected NSSAI may be associated with multiple PLMNs, and these multiple PLMNs may be EPLMNs.

A tracking area is a single or multiple ranges that can be expressed using location information of the UE_A 10 managed by the core network. The tracking area may include multiple cells. Furthermore, the tracking area may be a range in which a control message such as paging is broadcast, or may be a range in which the UE_A 10 can move without performing a handover procedure. Furthermore, the tracking area may be a routing area, may be a location area, or may be any area similar to these. The tracking area may be hereinafter a TA. The tracking area may be identified by a Tracking Area Identity (TAI) including a Tracking area code (TAC) and a PLMN.

The Registration area is a set of one or multiple TAs allocated to the UE by the AMF. Note that, while moving within one or multiple TAs included in a registration area, the UE_A 10 may be able to move without transmitting and/or receiving a signal for updating the tracking area. In other words, the registration area may be an information group indicating an area in which the UE_A 10 can move without performing a tracking area update procedure. The registration area may be identified by a TAI list configured by one or multiple TAIs.

A TAI included in the TAI list may belong to one PLMN or multiple PLMNs. In a case that multiple TAIs included in the TAI list belong to different PLMNs, the PLMNs may be EPLMNs.

A UE ID is information for identifying the UE. Specifically, the UE ID may be a Subscription Concealed Identifier (SUCI), or a Subscription Permanent Identifier (SUPI), or a Globally Unique Temporary Identifier (GUTI), or an International Mobile Subscriber Identity (IMEI), or an IMEI Software Version (IMEISV), or a Temporary Mobile Subscriber Identity (TMSI), for example. Alternatively, the UE ID may be other information configured by an application or within the network. Moreover, the UE ID may be information for identifying the user.

N1 NAS signalling connection is connection between the UE and the network (AMF) and may be managed and present independently on the 3GPP access and on the non-3GPP access.

A state where the N1 NAS signalling connection is established may be a 5GMM-CONNECTED mode. A state where the N1 NAS signalling connection is not established may be a 5GMM-IDLE mode.

In other words, the state where the N1 NAS signalling connection is established on the 3GPP access may be referred to as a state where the UE is in a 5GMM connected mode over 3GPP access (5GMM-CONNECTED mode over 3GPP access), and the state where the N1 NAS signalling connection is not established on the 3GPP access may be referred to as a state where the UE is in a 5GMM non-connected mode over 3GPP access (5GMM-IDLE mode over 3GPP access).

Similarly, a state where the N1 NAS signalling connection is established on the non-3GPP access may be referred to as a state where the UE is in a 5GMM connected mode over non-3GPP access (5GMM-CONNECTED mode over non-3GPP access), and a state where the N1 NAS signalling connection is not established on the non-3GPP access may be referred to as a state where the UE is in a 5GMM non-connected mode over non-3GPP access (5GMM-IDLE mode over non-3GPP access).

The Stand-alone Non-Public Network (SNPN) is a type of NPN being a 5GS deployed for non-public use and is an NPN that is operated by an NPN operator and that is not dependent on the NF provided by the PLMN. In other words, the SNPN may be an NPN-dedicated network independent of PLMNs. The SNPN is identified by a combination of a PLMN ID and a Network Identifier (NID). A PLMN ID used for an SNPN ID may be information reserved for a private network, and for example, an MCC included in the PLMN ID may be 999.

The UE that can use the SNPN may support an SNPN access mode. The UE configured to operate in the SNPN access mode may be able to select the SNPN and be registered with the SNPN or need not be able to select the PLMN. The UE configured to operate in the SNPN access mode may be able to perform an SNPN selection procedure or need not be able to perform a PLMN selection procedure. The UE not configured to operate in the SNPN access mode although the UE can use the SNPN (SNPN enabled) need not be able to select the SNPN and be registered with the SNPN or may be able to select the PLMN. The UE not configured to operate in the SNPN access mode need not be able to perform the SNPN selection procedure or may be able to perform the PLMN selection procedure.

The UE operating in the SNPN access mode may be able to select the SNPN via Uu (3GPP access). The UE operating in the SNPN access mode may be able to select the SNPN via Uu or NWu established via a PDU session provided by the PLMN selected via Uu or NWu (non-3GPP access). The UE not operating in the SNPN access mode may be able to select the PLMN via Uu or NWu established via a PDU session provided by the SNPN selected via Uu or NWu (non-3GPP access).

Here, a mode of connecting by the UE to the SNPN or the SNPN service (hereinafter, also simply referred to as the SNPN) over non-3GPP access may include two types: connection to the SNPN via the PLMN and direct connection to the SNPN over non-3GPP access.

The connection to the SNPN via the PLMN may be obtained by the UE first registering with the PLMN and establishing a PDU session as a communication path, and further providing connection via the Data Network (DN) and the N3IWF in the SNPN. Here, the connection procedure to the SNPN via the PLMN may be implemented by the UE performing, after the registration procedure with the PLMN and/or the PDU session establishment procedure, a general registration procedure with the PLMN over non-3GPP access and/or a procedure similar to the PDU session establishment procedure, and then completing the procedures according to acceptance from the SNPN. Noted that, in the SNPN connection via the PLMN, the UE may perform registration with and connection to the PLMN over 3GPP access or non-3GPP access. Furthermore, NAS messages may be transmitted and/or received via the N1 interface between the UE connected to the SNPN via the PLMN and the AMF in the SNPN.

The direct connection to the SNPN over non-3GPP access may include direct connection to the SNPN over untrusted non-3GPP access and direct connection to the SNPN over trusted non-3GPP access, and registration with the SNPN and establishment of a communication path to the SNPN may be performed by a general registration procedure with the PLMN over non-3GPP access and/or a procedure similar to the PDU session establishment procedure. Note that the UE attempting to connect directly to the SNPN over non-3GPP access may operate in an SNPN access operation mode. A Network identifier (NID) is information identifying a network. An SNPN may be identified by a combination of a PLMN ID and an NID. An NID may be information that is unique within an SNPN or unique information.

A Public network integrated NPN is a network that is implemented using function units of a PLMN. In other words, the Public network integrated NPN is an NPN that is virtually implemented within the PLMN. A Public network integrated NPN is also an NPN that can be created via a PLMN. A Public network integrated NPN may also be implemented using the functionality of a network slice. Specifically, a Public network integrated NPN may be a network that can be implemented using a network slice allocated for an NPN. In this case, the Public network integrated NPN may be identified by S-NSSAI or by a combination of S-NSSAI and a CAG ID.

A Public network integrated NPN may also be implemented using a DN. Specifically, a Public network integrated NPN may be a network that can be implemented using a DN for an NPN. In this case, the Public network integrated NPN may be identified by a DNN or by a combination of a DNN and a CAG ID.

A Closed Access Groups (CAG) ID is information identifying a group of subscribers allowed to connect to one or multiple cells associated with a CAG. A CAG may be a group identified by a CAG ID. A CAG is a group used in a case where a Public network integrated NPN is implemented using a network slice. A CAG may be used to prevent UEs not allowed by an NPN from attempting to access a network slice allocated for the NPN. A CAG ID is information that is unique within a PLMN.

An SNPN-enabled UE is a UE configured to use an SNPN. An SNPN-enabled UE may store at least one piece of information regarding an SNPN. In other words, configuration information of an SNPN-enabled UE may include information indicating that an SNPN is available. An SNPN-enabled UE may also support an SNPN access mode or an SNPN access operation mode. In other words, an SNPN-enabled UE may operate in the SNPN access mode or the SNPN access operation mode.

The SNPN access mode is a mode in which the UE selects only the SNPN. More specifically, the UE in the SNPN access mode may be a mode in which the UE performs a procedure, processing, or the like for registering with and connecting to the SNPN. Further, in a case of performing an SNPN selection or ON-SNPN selection as a network selection, or in a case of performing a normal registration procedure with the SNPN, or in a case of performing a registration procedure for onboarding, or in a case of performing a procedure for remote provisioning, the UE needs to operate in the SNPN access mode. Here, a UE operating in the SNPN access mode may be referred to as a UE in the SNPN access mode. A UE in the SNPN access mode may also be an SNPN-enabled UE.

The SNPN access operation mode is the SNPN access mode or a mode of connecting to the SNPN over non-3GPP access. Here, connection to the SNPN over "non-3GPP access" may refer to a case where the UE is connected to the SNPN via the PLMN or a case where the UE is directly connected to the SNPN over non-3GPP access. The direct connection to the SNPN over non-3GPP access may be direct connection to the SNPN over "trusted non-3GPP access" or may be direct connection to the SNPN over "untrusted non-3GPP access". The UE may also operate in the SNPN access operation mode in a case where the UE operates in the SNPN access mode. The UE may also not operate in the SNPN access operation mode in a case where the UE does not operate in the SNPN access mode. A UE in the SNPN access mode may also be a UE in the SNPN access operation mode.

An SNPN selection process may be a process for selecting an SNPN. An SNPN selection process may also be a process for a UE to select an SNPN. An SNPN selection process may also be a process performed in a case where a UE connects to an SNPN. An SNPN selection process may be referred to as SNPN selection or an SNPN selection procedure. SNPN selection may be referred to as an SNPN selection process or an SNPN selection procedure. An SNPN selection procedure may be referred to as an SNPN selection process or SNPN selection.

A UE operating in the SNPN access mode or the SNPN access operation mode may perform an SNPN selection process. A UE not operating in the SNPN access mode or the SNPN access operation mode may not perform an SNPN selection process. An SNPN selection process may have an automatic SNPN selection mode and a manual SNPN selection mode. An SNPN selection procedure may be performed without registration. In other words, an SNPN selection procedure may be performed in a case where a UE has not completed registration with the network.

A UE not operating in an SNPN access mode or an SNPN access operation mode may perform a PLMN selection process. A UE operating in the SNPN access mode or the SNPN access operation mode may not perform a PLMN selection process. A PLMN selection procedure may be performed without registration. In other words, a PLMN selection procedure may be performed in a case where a UE has not completed registration with the network. A PLMN selection process may have an automatic PLMN selection mode and a manual PLMN selection mode.

A Non-Public Network (NPN) is a private network that is not intended for general use but is used by specific users for specific purposes such as the private use of a company or the like. There are two types of NPNs: a Stand-alone Non-Public Network (SNPN) and a Public network integrated NPN. Note that the NPN, as used hereinafter, may mean both the SNPN and the Public network integrated NPN.

Default UE credentials are information that a UE holds before an actual onboarding procedure. The default UE credentials may be information used to uniquely identify the UE. The default UE credentials may also be information used to prove the security of the UE.

A Default Credential Server (DCS) is a server that can authenticate the UE using default UE credentials. The default credential server may also be a server capable of providing other apparatuses or entities with a UE authentication function using default UE credentials. The DCS may include the AAA server or may include the AUSF and the UDM. In other words, the function of the DCS may be implemented by the AAA server, or may be implemented by the AUSF and the UDM.

NPN credentials are information that the UE uses for authentication to access an NPN. NPN credentials may be 3GPP credentials or non-3GPP credentials.

An Onboarding Network (ON) is a network that provides a UE with initial registration and/or access for onboarding purposes. In other words, a UE may register with and/or access an Onboarding Network to perform onboarding.

Here, the Onboarding Network may be realized by a PLMN. The Onboarding Network may also be realized by an SNPN. Note that the SNPN providing access to the UE for onboarding may be an Onboarding Standalone Non-public Network (ON-SNPN).

A Provisioning Server (PVS) is a server that provides subscription data to an authenticated UE. The Provisioning Server may be a server that provides subscription data and other configuration information to the authenticated UE.

The provisioning server may also be a server present in an Onboarding Network. The provisioning server may also be a server present in the PLMN. The provisioning server may also be a server present in the SNPN. The provisioning server may also be a server present in the core network. The provisioning server may also be a server present in an external DN.

A Subscription Owner (SO) is an entity that stores subscription data and/or other configuration information and provides the subscription data and/or other configuration information to a UE via a PS domain as a result of a UE onboarding procedure. In other words, a subscription owner may be an entity that stores subscription data and/or other configuration information and provides the subscription data and/or other configuration information to a UE in a UE onboarding procedure.

A Credentials Holder (CH) may be an entity that authenticates and authorizes connection by the UE to the SNPN that is separated from the CH. The above-described DCS may be one form of the CH. In other words, the DCS can be read as the CH.

UE onboarding is the provision of information necessary for a UE to gain access and connectivity to an approved NPN to the UE or an internal entity of the network.

In other words, UE onboarding may be the provision of information to a UE or an internal entity of the network. Here, the information may be information necessary for the UE to establish access and connectivity to the NPN. The access and connectivity to the NPN may be that which has been authenticated. The information may also be SNPN information.

In other words, in a case where a UE attempts to establish access and connectivity to an NPN, the UE may acquire information necessary to establish access and connectivity to the NPN by performing UE onboarding. The UE may also perform a procedure for establishing access and connectivity to the NPN after performing UE onboarding.

UE onboarding may be referred to as a UE onboarding procedure. UE onboarding may also be referred to as an onboarding service. UE onboarding may also be referred to as onboarding.

In other words, the UE onboarding procedure, as used herein, may mean UE onboarding. The onboarding service, as used herein, may mean UE onboarding. The onboarding, as used herein, may mean UE onboarding.

SNPN information is information necessary for a UE to establish access and connectivity to an SNPN. The SNPN information may be information that the UE uses to perform a procedure for establishing access and connectivity to the SNPN. SNPN information may also be subscription data and/or other configuration information. SNPN information may also be NPN credentials. SNPN information may also be referred to as NPN information.

The UE may acquire SNPN information from the network in UE onboarding. More specifically, the UE may acquire SNPN information from the provisioning server or the subscription owner in UE onboarding.

In other words, the network may provide SNPN information to the UE in UE onboarding. More specifically, the provisioning server or the subscription owner may provide SNPN information to the UE in UE onboarding.

A procedure of providing SNPN information is a procedure for the network to provide SNPN information to a UE. In other words, the procedure of providing SNPN information is a procedure for a UE to acquire SNPN information from the network. The procedure of providing SNPN information may also be a procedure for performing UE onboarding. Note that, in the present specification, the procedure of providing SNPN information is also referred to as a UE remote provisioning procedure, UE remote provisioning, a remote provisioning procedure, remote provisioning, or the like.

The network may provide SNPN information to the UE in the procedure of providing SNPN information. More specifically, the provisioning server or the subscription owner may provide SNPN information to the UE in the procedure of providing SNPN information.

The UE may also acquire SNPN information from the network in the procedure of providing SNPN information. More specifically, the UE may acquire SNPN information from the provisioning server or the subscription owner in the procedure of providing SNPN information.

Here, the procedure of providing SNPN information via the user plane is also referred to as a remote provisioning procedure via the user plane.

A procedure of providing SNPN information via the user plane is a procedure for the network to provide SNPN information to the UE via the user plane. In other words, the procedure of providing SNPN information via the user plane is a procedure for the UE to acquire SNPN information from the network via the user plane.

Specifically, the procedure of providing SNPN information via the user plane is a procedure of providing SNPN information from the network to the UE using a PDU session after establishing the PDU session between the UE and the network.

Here, in a case of using the procedure of providing SNPN information via the user plane, the network may provide SNPN information to the UE by establishing a PDU session with the UE and transmitting the SNPN information to the UE over the PDU session. In other words, in a case of using the procedure of providing SNPN information via the user plane, the UE may acquire SNPN information by establishing a PDU session with the network and receiving the SNPN information from the network over the PDU session.

A PDU session used to provide SNPN information may be a PDU session used for providing SNPN information. In other words, a PDU session used to provide SNPN information may be a PDU session for providing SNPN information.

A PDU session for an onboarding service is a PDU session established for an onboarding service. A PDU session for an onboarding service may be a PDU session established to perform a procedure of providing SNPN information.

A PDU session for an onboarding service may also be a PDU session used for an onboarding service. A PDU session for an onboarding service may also be a PDU session used in a procedure of providing SNPN information.

A PDU session for an onboarding service may also be a PDU session established in a network for use in onboarding services. Here, the network for use in onboarding may be an SNPN or a PLMN.

A PDU session for an onboarding service may also be a PDU session established in a state in which a registration procedure for an onboarding service is completed. A PDU session for an onboarding service may also be a PDU session established in a state in which registration with which only an onboarding service is available is completed.

Each apparatus may also establish a PDU session for an onboarding service to perform an onboarding service. Each apparatus may also establish a PDU session for an onboarding service to perform a procedure of providing SNPN information.

Each apparatus may also perform an onboarding service using a PDU session for an onboarding service. Each apparatus may also perform a procedure of providing SNPN information using a PDU session for an onboarding service.

Each apparatus may also perform remote provisioning via the user plane by using a PDU session for an onboarding service. In other words, the remote provisioning procedure via the user plane may include a procedure of establishing a PDU session for onboarding and performing processing of provisioning via the established PDU session for onboarding. Note that, here, the UE may acquire an FQDN or an IP address of the provisioning server (PVS) in the remote provisioning via the user plane during the procedure of establishing a PDU session for onboarding.

A UE operating in the SNPN access mode or the SNPN access operation mode may perform an Onboarding Network selection process. In other words, a UE may operate in the SNPN access mode or the SNPN access operation mode in a case where an Onboarding Network selection process is performed.

The "list of subscription data" is a list stored, maintained, and managed by the UE performing the SNPN access operation mode, and is also referred to as a list of subscriber data. Here, the UE may store, maintain, and manage, for each of the entries in the list of subscription data, one SNPN-specific attempt counter for 3GPP access, or one SNPN-specific attempt counter for non-3GPP access, or one counter for "the entry for the current SNPN considered invalid for 3GPP access" events, or a counter for "the entry for the current SNPN considered invalid for non-3GPP access" events, or one counter for "the entry for the current SNPN considered invalid for non-3GPP access" events. Note that, in the present specification, the SNPN-specific attempt counter for 3GPP access and the SNPN-specific attempt counter for non-3GPP access are simply referred to herein as the "attempt counter(s)", the counter for the entry for the current SNPN entry considered invalid for 3GPP access events and the counter for the entry for the current SNPN entry considered invalid for non-3GPP access events are simply referred to as the "event counter(s)", and the attempt counter or event counter is simply referred to as the "counter(s)".

Here, the entries of the list of subscription data may be configured per SNPN ID and/or per access type. In other words, the various counters included in the list of subscription data may be configured per SNPN ID and/or per access type. The list of subscription data may be maintained or deleted regardless of whether the UE is powered on/off, or a SIM is inserted/removed, or whether the SNPN access operation mode of the UE is activated/deactivated.

Furthermore, the UE may store the list of subscription data and/or the counters for the list in a non-volatile memory. The UE may clear the attempt counter and reset the event counter in a case that a selected one of the entries of the subscription data is updated or in a case that the USIM for the selected PLMN subscription is removed. Furthermore, the UE implementation-specific maximum value of these counters may be less than or equal to 10, and different counters may use different maximum values.

A forbidden PLMN list or a list of "forbidden PLMN(s)" may be a list for managing the PLMNs for which connection (access) and/or registration is forbidden and may be a list including zero or more PLMN IDs. Here, the forbidden PLMN list may be a list that the UE manages inside the UE. More specifically, the UE may add a PLMN ID of the core network to the forbidden PLMN list based on reception of a registration reject message from the core network in a case that the UE performs the registration procedure.

In regard to the forbidden PLMN list, multiple lists may be managed for each access type inside the UE, and for example, two lists, namely a forbidden PLMN list for the 3GPP access and a forbidden PLMN list for the non-3GPP access may be managed.

The forbidden PLMN list may be stored and managed in a Universal Subscriber Identity Module (USIM), for example, inside the UE or the SIM.

A forbidden SNPN list may be a list for managing the SNPNs for which connection (access) and/or registration is forbidden and may be a list including zero or more SNPN IDs. Here, the forbidden SNPN list may include a "permanently forbidden SNPNs" list and a "temporarily forbidden SNPNs" list, and may be managed independently for each access type by the UE operating in the SNPN access operation mode. In the present specification, the "permanently forbidden SNPNs" list and the "temporarily forbidden SNPNs" list are collectively simply referred to as a forbidden SNPN list. In other words, unless otherwise specified, the forbidden SNPN list refers to the "permanently forbidden SNPNs" list and/or the "temporarily forbidden SNPNs" list. The forbidden SNPN list is also referred to as a list of forbidden SNPNs.

Furthermore, in a case that the UE supports connection to the SNPN using credentials from the credential holder, then for each list of subscription data or each entry of PLMN subscription, the "permanently forbidden SNPNs" list and the "temporarily forbidden SNPNs" list, rather than the forbidden PLMN list, may be managed independently for each access type by the UE operating in the SNPN access operation mode.

Here, the fact that the "permanently forbidden SNPNs" list and the "temporarily forbidden SNPNs" list are managed independently for each access type may mean that four types of lists are each managed independently: a "permanently forbidden SNPNs" list for 3GPP access, a "permanently forbidden SNPNs" list for non-3GPP access, a "temporarily forbidden SNPNs" list for 3GPP access, and a "temporarily forbidden SNPNs" list for non-3GPP access.

In a case that the UE supports an onboarding service in the SNPN, the UE operating in the SNPN access operation mode may also manage an additional "permanently forbidden SNPNs" list for the onboarding service and an additional "temporarily forbidden SNPNs" list for the onboarding service. In other words, the "permanently forbidden SNPNs" list and the "temporarily forbidden SNPNs" list may be managed as different lists for normal SNPN access and SNPN access for the onboarding service. Furthermore, the additional "permanently forbidden SNPNs" list for the onboarding service and the additional "temporarily forbidden SNPNs" list for the onboarding service may be independently managed for each access type, and in this case, eight types of lists may be independently managed.

Here, the forbidden SNPN list may be a list managed inside the UE and may be a list managed by, for example, a Universal Subscriber Identity Module (USIM), a SIM, or the like inside the UE.

For example, based on reception, from the core network, of a reject message including a reject cause value (5GMM cause value), the UE may add or delete the SNPN ID of the core network to or from the forbidden SNPN list. Here, for example, the various procedures may include the registration procedure, the service request procedure, or the authentication procedure, the reject message may include a registration reject message, a service reject message, or an authentication reject message, and the reject cause value may include one or more of Illegal UE (#3), Illegal ME (#6), 5GS services not allowed (#7), N1 mode not allowed (#27), Non-3GPP access to 5GCN not allowed (#72), Temporarily not authorized for this SNPN (#74), or Permanently not authorized for this SNPN (#75), the operation will be described in detail later.

A timer T3510 is a timer for 5GS mobility management, and is a timer run in the UE. Here, the timer T3510 may be a timer that is started in a case that the UE transmits the registration request message and that is stopped in a case that the UE receives, from the network, the registration accept message or the registration reject message as a response message.

A timer T3517 is a timer for 5GS mobility management, and is a timer run in the UE. Here, the timer T3517 is a timer that is started in a case that the UE transmits a SERVICE REQUEST message or a CONTROL PLANE SERVICE REQUEST message and that is stopped in a case that the UE receives a service accept message or a service reject message as a response message from the network.

A timer T3247 is a timer for 5GS mobility management, and is a timer run in the UE. Here, the timer T3247 is a timer that is started in a case that the UE in the N1 mode receives a non-integrity protected registration reject message or a non-integrity protected service reject message from the network and that is stopped in a case that the SIM/USIM is removed from the UE, in a case that the entry of the SNPN ID in the subscription data list is updated, or in a case that the UE is powered off.

Here, the UE starts the timer T3247 with a random value ranging from 15 minutes to 30 minutes in a case that the cause value (5GMM cause value) included in the above-described reject message received by the UE is #74, and with a random value ranging from 30 minutes to 60 minutes in a case that the 5GMM cause value is other than #74.

Furthermore, the UE may stop the timer T3510 or the timer T3517 and start the timer T3510 in a case that the UE receives the registration reject message or the service reject message that is not integrity protected while the timer T3517 or the timer T3247 is running.

Note that the timer T3510, or the timer T3517, or the timer T3247 may be a timer for 5GS mobility management. Furthermore, the timer T3510, or the timer T3517, or the timer T3247 may be a timer running on the UE under the above-described condition.

The NAS message including various reject messages may include integrity protected messages and non-integrity protected messages. Integrity checking may be performed by the NAS or may be performed on NAS signalling.

Each reject message in the present specification may include an integrity protected NAS reject message and a non-integrity protected NAS reject message. Furthermore, these messages may be synonymous with an integrity protected NAS message and a non-integrity protected NAS message. Furthermore, these messages may be synonymous with a message whose integrity protected by the NAS or a message which is not integrity protected by the NAS.

Reject cause values (5GMM cause values) mainly dealt with in the present specification include Illegal UE (#3), Illegal ME (#6), 5GS services not allowed (#7), N1 mode not allowed (#27), Non-3GPP access to 5GCN not allowed (#72), Temporarily not authorized for this SNPN (#74), and Permanently not authorized for this SNPN (#75). Hereinafter, in the present specification, for example, "Illegal UE (#3)" is also referred to as a reject cause value #3.

### 2.3. Description of Counters in Present Embodiment

Now, the counters maintained and/or stored and/or managed by each apparatus in the present embodiment will be described.

An attempt counter #0 in the present embodiment is an SNPN-specific attempt counter for 3GPP access. The attempt Counter #0 may be a counter used in a case that the UE connects to the SNPN or the SNPN service over 3GPP access.

In the present embodiment, an attempt counter #1 is an SNPN-specific attempt counter for non-3GPP access. The attempt counter #1 may be a counter used in a case that the UE connects to the SNPN via the PLMN. Furthermore, the attempt counter #1 may be a counter used in a case that the UE supports connection to the SNPN service via the PLMN.

An attempt counter #2 in the present embodiment is an SNPN-specific attempt counter for non-3GPP access used for connection to the SNPN service via the PLMN and for direct connection to the SNPN service over non-3GPP access. The attempt counter #2 may be a counter used in a case that the UE connects to the SNPN service via the PLMN and directly connects to the SNPN service over non-3GPP access. Furthermore, the attempt counter #2 may be a counter used in a case that the UE supports connection to the SNPN service via the PLMN and direct connection to the SNPN over non-3GPP access.

Furthermore, the attempt counter #2 may be a counter obtained by extending the attempt counter #1. More particularly, management of attempt counter #1 further takes into account the case where the UE is directly connected to the SNPN over non-3GPP access in addition to the case where the UE is connected to the SNPN via the PLMN.

In other words, since the attempt counter #2 is a counter that is used for connection to the SNPN service via the PLMN and for direct connection to the SNPN service over non-3GPP access, for example, in a case that connection to the SNPN service via the PLMN is switched to direct connection to the SNPN service over non-3GPP access, the attempt counter #2 may be a counter that takes over and uses the value for the connection to the SNPN service via the PLMN or may be a counter that is used after resetting the value once.

In the present embodiment, an attempt counter #3 is an SNPN-specific attempt counter for non-3GPP access used for direct connection to the SNPN service over non-3GPP access. The attempt counter #3 may be a counter used in a case that the UE directly connects to the SNPN service over non-3GPP access. Furthermore, the attempt counter #3 may be a counter used in a case that the UE supports direct connection to the SNPN service over non-3GPP access.

In other words, unlike the attempt counter #2, the attempt counter #3 is a counter that is also used for direct connection to the SNPN service over non-3GPP access but that is not used for connection to the SNPN service via the PLMN, and thus, for example, in a case that connection to the SNPN service via the PLMN is switched to direct connection to the SNPN service over non-3GPP access, the attempt counter #1 may be used for connection to the SNPN service via the PLMN, whereas the attempt counter #3 may be used for direct connection to the SNPN service over non-3GPP access.

In the present embodiment, an event counter #0 is a counter for "the entry for the current SNPN considered invalid for 3GPP access" events. The event counter #0 may be a counter used in a case that the UE connects to the SNPN or the SNPN service over 3GPP access.

In the present embodiment, an event counter #1 is a counter for "the entry for the current SNPN considered invalid for non-3GPP access" events. The event counter #1 may be a counter used in a case that the UE connects to the SNPN service via the PLMN. Furthermore, the event counter #1 may be a counter used in a case that the UE supports connection to the SNPN service via the PLMN.

In the present embodiment, the event counter #2 is a counter for "the entry for the current SNPN considered invalid for non-3GPP access" events, which is used for connection to the SNPN service via the PLMN and for direct connection to the SNPN service over non-3GPP access. The event counter #2 may be a counter used in a case that the UE connects to the SNPN service via the PLMN and directly connects to the SNPN service over non-3GPP access. Furthermore, the event counter #2 may be a counter used in a case that the UE supports connection to the SNPN service via the PLMN and direct connection to the SNPN over non-3GPP access.

Furthermore, the event counter #2 may be a counter obtained by extending the event counter #1. More particularly, the management of event counter #2 further takes into account the case where the UE is directly connected to the SNPN over non-3GPP access in addition to the case where the UE is connected to the SNPN via the PLMN, which case is covered by the event counter #1.

In other words, the event counter #2 is a counter that is also used for connection to the SNPN service via the PLMN and that is also used for direct connection to the SNPN service over non-3GPP access, and thus, for example, in a case that connection to the SNPN service via the PLMN is switched to direct connection to the SNPN service over non-3GPP access, the event counter #2 may be a counter that takes over and uses the value for connection to the SNPN service via the PLMN or may be a counter that is used after resetting the value once.

In the present embodiment, the event counter #3 is a counter for "the entry for the current SNPN considered invalid for non-3GPP access" events, which is used for direct connection to the SNPN service over non-3GPP access. The event counter #3 may be a counter used in a case that the UE is directly connected to the SNPN service over non-3GPP access. Furthermore, the event counter #3 may be a counter used in a case that the UE supports direct connection to the SNPN service over non-3GPP access.

For example, unlike the event counter #2, the event counter #3 is a counter that is also used for direct connection to the SNPN service over non-3GPP access but that is not used for connection to the SNPN service via the PLMN, and thus, for example, in a case that connection to the SNPN service via the PLMN is switched to direct connection to the SNPN service over non-3GPP access, the event counter #1 may be used for connection to the SNPN service via the PLMN, whereas the event counter #3 may be used for direct connection to the SNPN service over non-3GPP access.

Note that any one or more of the various counters described in this section (the attempt counters #0 to #3 and the event counters #0 to #3) may be included in the list of subscription data described above and stored, maintained, and managed by the UE. In other words, the UE operating in the SNPN access operation mode may store, maintain, and manage a list of subscription data including any one or more of the various counters described in this section (the attempt counters #0 to #3 and the event counters #0 to #3).

The various counters described in this section (the attempt counters #0 to #3 and the event counters #0 to #3) are independent and different counters, and each counter may be independently stored, maintained, and managed in the UE. Furthermore, the various counters described in this section (the attempt counters #0 to #3 and the event counters #0 to #3) may be stored, maintained, and managed for each SNPN ID.

The storage, maintenance, and management, by the UE, of the various counters described in this section (the attempt counters #0 to #3 and the event counters #0 to #3) may be based on the form of connection to the SNPN, which is supported by the UE. For example, in a case that the UE supports connection to the SNPN over non-3GPP access, the attempt counter #1 and the attempt counter #2 and the event counter #1 and the event counter #2 may be included in the subscription data list and stored, maintained, and managed.

### 3. Embodiments in Present Invention

### 3.1 Description of Procedures or Processing Used in Each Embodiment

Next, procedures used in each embodiment will be described. Note that the procedure or processing used in each embodiment includes the registration procedure, the service request procedure, the authentication procedure, and processing of the counters in each procedure.

Note that each procedure may be a procedure for the UE to be directly connected to the SNPN over non-3GPP access or to attempt direct connection to the SNPN. Furthermore, each procedure may be a procedure performed by the UE operating in the SNPN access operation mode or the SNPN access mode.

Furthermore, in the description of each procedure in this section, a detailed description of entities constituting non-3GPP access will be omitted, and transmission and reception of NAS messages transmitted to and/or received from the core network configured as an SNPN will be mainly described.

Hereinafter, each of the procedures will be described.

### 3.1.1 Registration Procedure

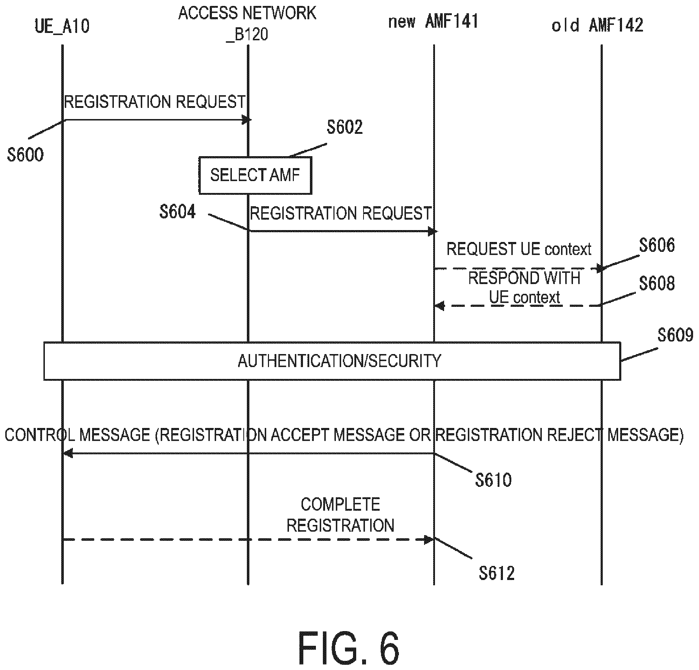

The Registration procedure will be described with reference to FIG. 6. Note that, in this section, the registration procedure will also be referred to as the present procedure.

Here, the registration procedure in the present embodiment may be a registration procedure with the SNPN over non-3GPP access (access network_B 120). Hereinafter, the registration procedure with the SNPN over non-3GPP access is also referred to as the present procedure. The present procedure may be a procedure performed by the UE in the SNPN access operation mode or the SNPN access mode. Furthermore, the present procedure may be the registration procedure for direct connection by the UE to the SNPN over non-3GPP access.

The present procedure may be an initial registration procedure, or a mobile and periodic registration procedure, or an initial registration procedure for an onboarding service in the SNPN, and may be a procedure performed on the SNPN over non-3GPP access as described above. Note that the registration procedure for onboarding may be an initial registration procedure.

The registration procedure is a procedure that is initiated by the UE for registration with the access network_B and/or the core network_B and/or the DN and/or the SNPN. In a case that the UE is in a state of not being registered with the network, for example, the UE can perform the present procedure at any timing, for example, a power input time. In other words, the UE can initiate the present procedure at any timing as long as the UE is in the deregistered state (5GMM-DEREGISTERED state). In addition, each apparatus (in particular, the UE and the AMF) can transition to the registered state (5GMM-REGISTEDED state), based on completion of the registration procedure. Note that each registered state may be managed by each apparatus for each access. Specifically, each apparatus may independently manage the registration state (registered state or deregistered state) for 3GPP access and the registration state for non-3GPP access.

In addition, the registration procedure may be a procedure for updating position registration information of the UE on the network, and/or periodically provide notification of the state of the UE from the UE to the network, and/or updating a specific parameter related to the UE on the network.

The UE may initiate the registration procedure in a case that the UE has had mobility across tracking areas (TAs). In other words, the UE may initiate the registration procedure in a case that the UE has moved to a TA that is different from the TA indicated by a TA list (TAI list or registration area) held by the UE. Furthermore, the UE may initiate the present procedure in a case that a running back-off timer or any other timer expires. In addition, the UE may initiate the registration procedure in a case that a context of each apparatus needs to be updated due to disconnection and/or invalidation of a PDU session. Furthermore, in a case that there has been a change in capability information and/or a preference, related to PDU session establishment of the UE, the UE may initiate the registration procedure. In addition, the UE may periodically initiate the registration procedure. Furthermore, the UE may initiate the registration procedure based on completion of the UE configuration update procedure, or based on completion of the registration procedure, or based on completion of the PDU session establishment procedure, or based on completion of the PDU session management procedure, or based on information received from the network in each procedure, or based on expiry or stop of the back-off timer. Note that the UE is not limited to this configuration, and can perform the registration procedure at any timing.

Note that the above-described procedure for the UE to transition from the state of not being registered with the network (deregistered state) to the state of being registered with the network (registered state) may be an initial registration procedure or a registration procedure for initial registration. Alternatively, the registration procedure performed in the state in which the UE is registered with the network (registered state) may be a registration procedure for mobility and periodic registration update or a mobility and periodic registration procedure. Alternatively, a procedure of initial registration for onboarding services in SNPN may be performed to acquire information of the SNPN in the state where the UE is not registered with the network.

Note that the UE may perform the network selection described above and select and determine the PLMN or SNPN or ON-SNPN requested by the UE before the registration procedure or in an initial state of the registration procedure.

A new AMF 141 in FIG. 6 indicates an AMF with which the UE_A 10 is registered through the present procedure, and an old AMF 142 means an AMF with which the UE has been registered with a procedure before the present procedure. In a case that no change in AMF occurs in the present procedure, an interface between the old AMF 142 and the new AMF 141 and a procedure between the old AMF 142 and the new AMF 141 do not occur, and the new AMF 141 may be the same apparatus as the old AMF 142. Note that in the present document, description of AMF may mean the new AMF 141, may mean the old AMF 142, or may mean both of them. The new AMF 141 and the old AMF 142 may be AMFs 140.

First, the UE_A 10 initiates the registration procedure by transmitting the Registration request message to the new AMF 141 (S600), (S602), and (S604). Specifically, the UE transmits the registration request message to the access network_B 120 (S600). Moreover, the registration request message is a NAS message transmitted and/or received over the N1 interface.

Furthermore, the UE_A 10 may include and transmit identification information indicating the type of the present procedure in the registration request message. Here, the identification information indicating the type of the present procedure may be a 5GS registration type IE, and may be information indicating that the present procedure is the registration procedure performed for initial registration, or for update of the registration information associated with movement, or for periodic update of the registration information, or for registration at the time of emergency.

Here, the AMF identification information may be information for identifying the AMF or a set of AMFs, for example, a 5G S-Temporary Mobile Subscription Identifier (5G S-TMSI) or a Globally Unique AMF Identifier (GUAMI).

In addition, the UE_A 10 may include and transmit an SM message (for example, a PDU session establishment request message) in the registration request message, or may transmit an SM message (for example, a PDU session establishment request message) together with the registration request message to thereby initiate a PDU session establishment procedure during the registration procedure.

In a case of receiving the registration request message, the access network_B 120 selects the AMF for transfer of the registration request message (S602). Note that the access network_B 120 can select the AMF based on the registration request message and/or one or multiple pieces of identification information included in the registration request message. For example, the access network_B 120 may select the AMF supporting a function corresponding to the UE capability information included in the message.

Note that the method of selecting the AMF is not limited to the methods described above, and the access network_B 120 may select the AMF based on other conditions. The access network_B 120 extracts the registration request message from the received RRC message and transfers the registration request message to the selected new AMF (S604).

In a case that the registration request message has been received, the new AMF 141 can perform first condition fulfillment determination. The first condition fulfillment determination is performed by the network (or the new AMF 141) to determine whether to accept the request from the UE. In a case that the first condition fulfillment determination is true, the new AMF 141 performs the procedure from S606 to S612. On the other hand, in a case that the first condition fulfillment determination is false, the new AMF 141 may skip the procedure from S606 to S608 and perform the procedure of S608 and/or S610.

In this case, the procedure in S609 may be a procedure of Authentication/Security. Note that in a case that the present procedure is performed as a registration procedure for the onboarding service, the AMF may receive and store the FQDN or IP address of the provisioning server (PVS) from the Default Credential Server (DCS) via the Authentication Server Function (AUSF) during the procedure in S609. Here, the PVS may be a server that provisions information or credentials of the SNPN to the UE in the procedure for the onboarding service. The FQDN or IP addresses of the PVS transmitted and/or received in S609 may be used in a case that the UE connects to the PVS and acquires information or credentials of the SNPN in a procedure for remote provisioning via the user plane, which is performed after completion of the present procedure performed as a registration procedure for the onboarding service.

Alternatively, the new AMF 141 may perform the first condition fulfillment determination after requesting a UE context from the old AMF 142 and then receiving the UE context from the old AMF 142 (S606 and S608). In that case, the new AMF 141 may perform S610 and/or S612 in a case that the first condition fulfillment determination is true. On the other hand, in a case that the first condition fulfillment determination is false, the new AMF 141 may perform S610.

Note that in this regard, the control message transmitted and/or received in S610 may be the Registration accept message in a case that the first condition fulfillment determination is true, and the control message transmitted and/or received in S610 may be the Registration reject message in a case that the first condition fulfillment determination is false.

Note that the first condition fulfillment determination may be performed based on reception of the registration request message, and/or each piece of identification information included in the registration request message, and/or subscriber information, and/or capability information of the network, and/or the operator policy, and/or a state of the network, and/or registration information of the user, and/or a context stored in the AMF, and/or the like.

For example, the first condition fulfillment determination may be true in a case that the network allows the request from the UE, and the first condition fulfillment determination may be false in a case that the network does not allow the request from the UE. In addition, in a case that a network with which the UE is to be registered and/or an apparatus in the network supports the function requested by the UE, the first condition fulfillment determination may be true, whereas in a case that the network and/or the apparatus does not support the function requested by the UE, the first condition fulfillment determination may be false. Furthermore, in a case that the transmitted and/or received identification information is allowed, the first condition fulfillment determination may be true, whereas in a case that the transmitted and/or received identification information is not allowed, the first condition fulfillment determination may be false.

The new AMF 141 performs the procedure of S606 and S608 in a case that the AMF indicated by the AMF identification information included in the message received by the new AMF 141 from the UE is the old AMF 142, and does not perform the procedure of S606 and S608 in a case that the AMF indicated by the AMF identification information included in the message received by the new AMF 141 from the UE_A 10 is the new AMF 141. In other words, the procedure of S606 and S608 is performed in a case that a change occurs in the AMF (AMF change) due to the present procedure, and the procedure of S606 and S608 is skipped in a case that no change occurs in the AMF.

A UE context transfer procedure will be described (S606 and S608). The new AMF 141 transmits a UE context request message to the old AMF 142 (S606). The old AMF 142 transmits the UE context to the new AMF 141 based on the received UE context request message. The new AMF 141 generates a UE context based on the received UE context.

Here, the UE context transmitted from the new AMF 141 to the old AMF 142 may include the UE ID and the allowed NSSAI.

The new AMF 141 may transmit the control message to the UE based on the determination of the first condition fulfillment determination and/or based on the UE context received from the old AMF 142 (S610). The control message may be a registration accept message, or may be a registration reject message. Hereinafter, a case that the control message transmitted to the UE is a registration accept message will be described.

In a case that the control message is a registration accept message, the AMF can either include and transmit an SM message (for example, a PDU session establishment accept message) in the registration accept message, or transmit an SM message (for example, a PDU session establishment accept message) together with the registration accept message. However, such a transmission method may be performed in a case that an SM message (for example, a PDU session establishment request message) is included in the registration request message. In addition, the transmission method may be performed in a case that the SM message (for example, the PDU session establishment request message) is transmitted along with the registration request message. By performing such a transmission method as described above, the AMF can indicate that a procedure for SM has been accepted in the registration procedure.

In addition, based on each piece of the received identification information, and/or subscriber information, and/or capability information of the network, and/or the operator policy, and/or a state of the network, and/or the registration information of the user, and/or the context stored in the AMF, and/or the like, the AMF may indicate that the request from the UE has been accepted by transmitting a registration accept message, or may indicate that the request from the UE has been rejected by transmitting a registration reject message.

The UE receives the control message via the access network_B 120 (S610). In a case that the control message is a registration accept message, then by receiving the registration accept message, the UE can recognize that the request from the UE on the registration request message has been accepted, and recognize the details of the various pieces of identification information included in the registration accept message. Alternatively, in a case that the control message is a registration reject message, then by receiving the registration reject message, the UE can recognize that the request from the UE using the registration request message has been rejected and recognize the details of the various pieces of identification information included in the registration reject message. In addition, in a case that the UE does not receive the control message even after a prescribed period of time has elapsed after transmitting the registration request message, the UE may recognize that the request from the UE has been rejected.

Here, in a case that the UE receives the registration accept message from the AMF via the access network_B, the attempt counter #1 and/or the event counter #1 may be deleted or reset. Details will be described later (3.1.4, 3.2, and 3.3).

Here, the registration reject message received by the UE from the AMF may include, as the reject cause value (5GMM cause value), one or multiple of Illegal UE (reject cause value #3), Illegal ME (reject cause value #6), 5GS services not allowed (reject cause value #7), N1 mode not allowed (reject cause value #27), Non-3GPP access to 5GCN not allowed (reject cause value #72), Temporarily not authorized for this SNPN (reject cause value #74), or Permanently not authorized for this SNPN (reject cause value #75).

Furthermore, the registration reject message that the UE receives from the AMF may be a non-integrity protected message. In contrast, the registration reject message that the UE receives from the AMF may be an integrity protected message. Here, the integrity check of the registration reject message may be performed by the NAS.

In a case that the UE receives the registration reject message, and the timer T3510 and the timer T3517 are running, the UE may stop the timer T3510 or the timer T3517 and run the timer T3247. Here, the UE may stop the timer T3510 or the timer T3517 and further run the timer T3247 in a case that the received registration reject message is non-integrity protected and/or the reject cause value includes any one or multiple of the reject cause value #3, the reject cause value #6, the reject cause value #7, the reject cause value #27, the reject cause value #72, the reject cause value #74, and the reject cause value #75.

Furthermore, in a case that the control message is the registration accept message, the UE can transmit a registration complete message to the AMF via the access network_B 120, as a response message to the registration accept message (S610). Note that, in a case that the UE receives the SM message such as the PDU session establishment accept message, the UE may include and transmit the SM message such as the PDU session establishment complete message in the registration complete message, or may indicate that the procedure for SM is completed by including the SM message. Here, the registration complete message is a NAS message transmitted and/or received on the N1 interface.

The AMF receives the registration complete message via the access network_B 120 (S612). In addition, each apparatus completes the present procedure based on transmission and/or reception of the registration accept message and/or the registration complete message.

Alternatively, each apparatus may complete the registration procedure based on the transmission and/or the reception of the registration accept message or the registration reject message.

Note that each apparatus may transition to or maintain a state in which the UE is registered with the network (an RM_REGISTERED state or a 5GMM-REGISTERED state) based on the transmission and/or reception of the registration accept message and/or the registration complete message or may transition to or maintain a state in which the UE is not registered with the network (an RM_DEREGISTERED state or a 5GMM-DEREGISTERED state) on the access in which the UE has received the registration reject message for the current PLMN or SNPN based on the transmission and/or reception of the registration reject message. In addition, the transition of each apparatus to each state may be performed based on transmission and/or reception of the registration complete message and completion of the registration procedure.

Furthermore, each apparatus may perform processing based on information transmitted and/or received in the registration procedure, based on completion of the registration procedure. For example, in a case that information indicating that a part of the request from the UE has been rejected is transmitted and/or received, the cause for rejection of the request from the UE may be recognized. Furthermore, each apparatus may perform the present procedure again or may perform the registration procedure on another cell based on the cause for the rejection of the request from the UE.

Moreover, the UE may store the identification information received along with the registration accept message and/or the registration reject message or may recognize determination of the network based on the completion of the registration procedure. Furthermore, the UE may perform processing based on the received registration reject message and various pieces of information included in the message. Specific processing by the UE of the present embodiment will be described in the following sections (3.1.4, 3.2, and 3.3).

### 3.1.2 Service Request Procedure

Now, an overview of the service request procedure will be described. Hereinafter, the service request procedure is also referred to as the present procedure. The service request procedure may include a network-initiated procedure and a UE-initiated procedure.

The service request procedure in the present embodiment may be a procedure performed by the UE having registered with the SNPN over non-3GPP access (access network_B 120). Hereinafter, unless otherwise specified, the service request procedure performed on the SNPN over non-3GPP access is also referred to as the present procedure. The present procedure may be a procedure performed by the UE in the SNPN access operation mode or the SNPN access mode. Furthermore, the present procedure may be a procedure in a case that the UE is directly connected to the SNPN over non-3GPP access.

The present procedure performed in a case that the UE takes the initiative is a procedure for the UE in the non-connected state (CM-IDLE state) to request establishment of connection to the AMF in the core network_B via the N1 interface, and may transition to the connected state (CM-CONNECTED state) after the performance of the present procedure. The present procedure is also a procedure for the UE in the non-connected state or the connected state to activate the U-Plane connection of an already established PDU session.

First, the UE transmits a Service Request message to the AMF over non-3GPP access.

In a case that the present procedure is successful or is allowed by the network, the AMF transmits a Service Accept message to the UE via the access network_B, and the UE and the apparatuses may complete the present procedure.

Note that, here, in a case of receiving the service accept message from the AMF via the access network_B, the UE may delete or reset the attempt counter and/or the event counter. Details will be described later (3.1.4, 3.2, and 3.3).

In contrast, in a case that the present procedure fails or is not allowed by the network, the AMF may transmit a Service Reject message to the UE.

Here, the service reject message received by the UE from the AMF may include, as the reject cause value (5GMM cause value), one or multiple of Illegal UE (reject cause value #3), Illegal ME (reject cause value #6), 5GS services not allowed (reject cause value #7), N1 mode not allowed (reject cause value #27), Non-3GPP access to 5GCN not allowed (reject cause value #72), Temporarily not authorized for this SNPN (reject cause value #74), and Permanently not authorized for this SNPN (reject cause value #75).

Furthermore, the service reject message that the UE receives from the AMF may be a non-integrity protected message. In contrast, the service reject message that the UE receives from the AMF may be an integrity protected message. Here, the integrity check of the reject message may be performed by the NAS.

In a case that the UE receives the service reject message, and the timer T3510 or the timer T3517 is running, the UE may stop the timer T3510 or the timer T3517 and run the timer T3247. Here, the UE may stop the timer T3510 or the timer T3517 and further run the timer T3247 in a case that the received service reject message is non-integrity protected and/or the reject cause value includes any one or multiple of the reject cause value #3, the reject cause value #6, the reject cause value #7, the reject cause value #27, the reject cause value #72, the reject cause value #74, and the reject cause value #75.

The UE and the apparatuses may complete the present procedure based on the reception, by the UE, of the service accept message or service reject message transmitted from the AMF. Furthermore, the UE may perform processing based on the various received messages and the various pieces of information included in the messages. Specific processing by the UE of the present embodiment will be described in the following sections (3.1.4, 3.2, and 3.3).

### 3.1.3. Primary Authentication Procedure

Now, a primary authentication procedure will be described. Here, the primary authentication procedure in the present embodiment may be a procedure performed by the UE attempting to register with or connect to the SNPN over non-3GPP access (access network_B 120) or the UE connecting to the SNPN over non-3GPP access (access network_B 120). Note that, in this section, the primary authentication procedure will also be referred to as the present procedure.

The present procedure may be an EAP based primary authentication and key agreement procedure, and may be an Extensible Authentication Protocol Method for 3rd Generation Authentication and Key Agreement (EAP-AKA') associated procedure, or an Extensible Authentication Protocol-Transport Layer Security (EAP-TLS) associated procedure, or a procedure associated with the EAP approach other than EAP-AKA' and EAP-TLS.

The present procedure may also be an authentication procedure performed during the registration procedure or the service request procedure already described in this section (Section 3.1.). For example, the present procedure may be a procedure performed in authentication/security (S609) for which the registration procedure described in Section 3.1.1 is being performed. Alternatively, the present procedure may be a procedure other than the above-described procedures or a procedure performed by the UE and each apparatus as an independent procedure.

Note that, in the present procedure, messages are assumed to be transmitted and received between the UE and the AMF over non-3GPP access (access network_B 120) unless otherwise specified. The present procedure may be a procedure performed by the UE operating in the SNPN access operation mode or the SNPN access mode.

In the present procedure, first, the AMF transmits an Authentication Request message including an EAP request message to the UE via the access network_B. In a case of receiving, from the AMF, the Authentication Request message including the EAP request message, the UE transmits an Authentication Response including an EAP response message for the EAP request message to the AMF via the access network_B. Here, there may be one-to-one correspondence between the EAP request message and the EAP response message for the EAP request message.

Subsequently, the UE and the AMF transmit and/or receive the EAP request message and the EAP response message for the EAP request message as many times as necessary.

In a case that the present procedure is successful, or the present procedure is allowed by the network, the AMF transmits, to the UE, a Security Mode Command including an EAP-success message, and the UE and each apparatus may complete the present procedure.

Note that, in a case of receiving the accept message from the AMF, the UE may delete or reset the attempt counter and/or the event counter. Details will be described later (3.1.4, 3.2, and 3.3).

In contrast, in a case that the present procedure fails or in a case that the present procedure is not accepted by the network, the AMF may include an EAP-failure message in the Registration Reject message, or the Service Reject message, or the Registration Accept message, or the Service Accept message, or an Authentication Reject message, and transmit the message to the UE.

Here, the registration reject message, service reject message or authentication reject message received by the UE from the AMF and including the EAP-failure message may further include, as the reject cause value(s) (5GMM cause value(s)), any one or multiple of Illegal UE (reject cause value #3), Illegal ME (reject cause value #6), 5GS services not allowed (reject cause value #7), N1 mode not allowed (reject cause value #27), Non-3GPP access to 5GCN not allowed (reject cause value #72), Temporarily not authorized for this SNPN (reject cause value #74), or Permanently not authorized for this SNPN (reject cause value #75).

The registration reject message or service reject message or authentication reject message received by the UE from the AMF and including the EAP-failure message may be a non-integrity protected message. In contrast, the registration reject message or service reject message or authentication reject message received by the UE from the AMF and including the EAP-failure message may be an integrity protected message. Here, the integrity check of the reject message may be performed by the NAS.

The AMF may include either the EAP-success message or the EAP-failure message in an Authentication Result message.

The UE and each apparatus may complete the present procedure based on the reception, by the UE, of various messages transmitted from the AMF and including the EAP-success message or an EAP-failure message. Furthermore, the UE may perform processing based on the various received messages and the various pieces of information included in the messages. Specific processing by the UE of the present embodiment will be described in the following sections (3.1.4, 3.2, and 3.3).

### 3.1.4. Processing of Counters and the Like in Each Procedure]

Processing of the counters and the like in each procedure will be described. In this section, the processing of the counters in each procedure is also referred to as the present processing.

The present processing is processing performed in a case that the UE receives the registration reject message, service request message, or authentication reject message including the reject cause value (5GMM cause value) in the registration procedure, the service request procedure, or the authentication procedure in a case that the UE is connected to or attempts to connect to the SNPN or the SNPN service via the PLMN.

Here, the reject cause value(s) (the 5GMM cause value(s)) may be any one or multiple of Illegal UE (reject cause value #3), Illegal ME (reject cause value #6), 5GS services not allowed (reject cause value #7), N1 mode not allowed (reject cause value #27), Non-3GPP access to 5GCN not allowed (reject cause value #72), Temporarily not authorized for this SNPN (reject cause value #74), or Permanently not authorized for this SNPN (reject cause value #75).

The counter stored, maintained, and managed by the UE in the present processing may be the attempt counter #1 or the event counter #1. Note that the UE maintaining, storing and managing the attempt counter #1 or the event counter #1 may be the UE operating in the SNPN access operation mode.

Furthermore, the UE in the present processing may store, maintain and manage a "permanently forbidden SNPNs" list and/or a "temporarily forbidden SNPNs" list.

Alternatively, the registration procedure in the present processing may include the initial registration procedure or the mobility and periodic registration update procedure. Furthermore, in the present embodiment, the registration procedure may be the registration for the onboarding service in the SNPN or performance of the initial registration in the SNPN for the onboarding service unless otherwise specified.

On the other hand, in a case of receiving the registration accept message, the service accept message, or the authentication accept message in the registration procedure, the service request procedure, or the authentication procedure, the UE may delete or reset the attempt counter #1 and/or the event counter #1.

Description will be given of the details of processing related to the management of the various counters after the UE has received the reject message from the network.

### - Increment the attempt counter #1

In a case that the UE operating in the SNPN access operation mode receives the reject message (registration reject message, service reject message, or authentication reject message) without integrity protection including the reject cause value, over non-3GPP access in the procedure (service request procedure) in a case that the UE is connected to the SNPN service via the PLMN or the procedure (registration procedure or authentication procedure) used in a case that the UE attempts to connect to the SNPN via the PLMN, or based on the reception, the UE may increment the attempt counter #1 or the value of the attempt counter #1 by 1. Here, the reject cause value may be the reject cause value #27 and/or the reject cause value #72 and/or the reject cause value #74 and/or the reject cause value #75.

Furthermore, the addition in the attempt counter #1 may be performed during running of the timer T3247. Here, the timer T3247 may be a timer that is started in a case that the UE receives the registration reject message, the service reject message, or the authentication reject message. Furthermore, the timer T3247 may be a timer that is started in a case that various reject messages (registration reject message, service reject message or authentication reject message) received by the UE are non-integrity protected.

The addition in the attempt counter #1 may be performed in a case that the reject cause value is the reject cause value #27 and/or the reject cause value #72. The addition in the attempt counter #1 may be performed in a case that the reject cause value is the reject cause value #74 and/or the reject cause value #75, and that the UE receives the reject message (registration reject message, service reject message, or authentication reject message), and that the attempt counter #1 has a value less than or equal to the UE implementation-specific maximum value.

Alternatively, also in a case that the UE operating in the SNPN access operation mode receives, over non-3GPP access, the non-integrity protected registration reject message including Illegal UE (#3) and/or Illegal ME (#6) and/or 5GS services not allowed (#7) as the reject cause value over non-3GPP access in the registration with the SNPN for the onboarding service over non-3GPP access or the initial registration procedure with the SNPN for the onboarding service, the UE may increment the attempt counter #1 or to the value of the attempt counter by 1.

### - Increment the event counter #1

In a case that the UE operating in the SNPN access operation mode receives the reject message (registration reject message, service reject message, or authentication reject message) without integrity protection including the reject cause value over non-3GPP access in the procedure (service request procedure) in a case that the UE is registered with or connected to the SNPN service via the PLMN or the procedure (registration procedure or authentication procedure) used in a case that the UE attempts to connect to the SNPN service via the PLMN, or based on the reception, the UE may increment the event counter #1 or the value of the event counter #1 by 1. Here, the reject cause value may be Illegal UE (#3), and/or Illegal ME (#6), and/or 5GS services not allowed (#7).

Furthermore, the addition in the event counter #1 may be performed during running of the timer T3247. Here, the timer T3247 may be a timer that is started in a case that the UE receives the registration reject message, the service reject message, or the authentication reject message. Furthermore, the timer T3247 may be a timer that is started in a case that various reject messages (registration reject message, service reject message or authentication reject message) received by the UE are non-integrity protected.

The addition in the event counter #1 may be performed in a case that the UE is not registered on another access (3GPP access) and that the event counter #1 has a value less than or equal to the UE implementation-specific maximum value.

Alternatively, also in a case that the UE operating in the SNPN access operation mode does not register with the SNPN for the onboarding service over non-3GPP access or does not perform the initial registration procedure with the SNPN for the onboarding service, and receives, over non-3GPP access, the non-integrity protected registration reject message including Illegal UE (#3), and/or Illegal ME (#6), and/or the 5GS services not allowed (#7) as the reject cause value, then the UE may increment the event counter #1 or the value of the event counter #1 by 1.

### - Configure the attempt counter #1 with the UE implementation-specific maximum value

In a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service via the PLMN, or the procedure (registration procedure or authentication procedure) used in a case that the UE attempts to connect to the SNPN service via the PLMN, or the procedure for the onboarding service in the SNPN (registration procedure or authentication procedure), or in a case that the UE is registered with the SNPN for the onboarding service, or based on the reception, the UE may configure the attempt counter #1 with the UE implementation-specific maximum value, store or add, in or to the list of permanently forbidden SNPNs for the onboarding service, the SNPN ID for which the registration procedure for the onboarding service has been performed, and perform the SNPN selection for the onboarding service. Here, the reject cause value may be Illegal UE (#3), and/or Illegal ME (#6), and/or 5GS services not allowed (#7).

Alternatively, in a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service via the PLMN, or the procedure (registration procedure or authentication procedure) used in a case that the UE attempts to connect to the SNPN service via the PLMN, or based on the reception, the UE may configure the attempt counter #1 with the UE implementation-specific maximum value and disable N1 mode capability for non-3GPP access. Note that the procedure in which the UE receives the integrity protected reject message need not be the procedure in a case that the UE is not registered with the SNPN for the onboarding service or the procedure (registration procedure or authentication procedure) for the onboarding service in the SNPN. Here, the reject cause value may be N1 mode not allowed (#27) and/or Non-3GPP access to 5GCN not allowed (#72).

Alternatively, in a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service via the PLMN or the procedure (registration procedure or authentication procedure) used in a case that the UE attempts to connect to the SNPN service via the PLMN, or based on the reception, the UE may configure the attempt counter #1 with the UE implementation-specific maximum value. Here, the reject cause value may be Temporarily not authorized for this SNPN (#74) and/or Permanently not authorized for this SNPN (#75).

### - Configure the event counter #1 with the UE implementation-specific maximum value

In a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service via the PLMN or the procedure (registration procedure or authentication procedure) used in a case that the UE attempts to connect to the SNPN service via the PLMN, or based on the reception, the UE may configure the event counter #1 or the value of the event counter #1 with the UE implementation-specific maximum value. Here, the reject cause value may be Illegal UE (#3), and/or Illegal ME (#6), and/or 5GS services not allowed (#7). Here, the procedure in which the UE receives the reject message need not be the registration procedure for the onboarding service in the SNPN.

### - Behavior based on the attempt counter #1 and the reject cause value

In a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service via the PLMN or the procedure (registration procedure or authentication procedure) used in a case that the UE attempts to connect to the SNPN service via the PLMN, and the attempt counter #1 has a value greater than or equal to 1 and less than the UE implementation-specific maximum value, the UE may delete, from the "permanently forbidden SNPNs" list for non-3GPP access or the "temporarily forbidden SNPNs" list for non-3GPP access, the corresponding SNPN ID for which the procedure is being performed. Here, the reject cause value may be any one or multiple of the reject cause value #3, and/or the reject cause value #6, and/or the reject cause value #7, and/or the reject cause value #27, and/or the reject cause value #72, and/or the reject cause value #74, and/or the reject cause value #75. Furthermore, the deletion of the SNPN ID may be performed in a case that the UE supports, in the SNPN connection, the use of credentials provided by the credential holder.

Furthermore, in addition to the above-described conditions, in a case that the timer T3247 expires that is started in a case that the UE receives the registration reject message or the service reject message as the non-integrity protected reject message including the reject cause value, the UE may re-enable an N1mode capability for non-3GPP access, and in a case that the attempt counter #1 has a value greater than or equal to 1 and less than the UE implementation-specific maximum value, the UE may delete, from the "permanently forbidden SNPNs" list or the "temporarily forbidden SNPNs" list, the corresponding SNPN ID for which the procedure is being performed.

Alternatively, in addition to the above-described conditions, in a case that power is turned off or the UICC including the USIM is removed from the UE, the UE may delete, from the "permanently forbidden SNPNs" list for non-3GPP access or the "temporarily forbidden SNPNs" list for non-3GPP access, the corresponding SNPN ID for which the procedure is being performed.

Alternatively, in addition to the above conditions, in a case that an entry in the List of subscription data is updated, the UE does not support the use of credentials from the credential holder in connection to the SNPN, and the attempt counter #1 corresponding to the updated entry has a value greater than or equal to 1 and less than the UE implementation-specific maximum value, the UE may delete, from the "permanently forbidden SNPNs" list for non-3GPP access or the "temporarily forbidden SNPNs" list for non-3GPP access, the corresponding SNPN ID for which the procedure is being performed.

Alternatively, in addition to the above-described conditions, in a case that an entry in the List of subscription data is updated, and the UE supports the use of credentials from the credential holder in connection to the SNPN, and the attempt counter #1 for the SNPN corresponding to the entry included in the "permanently forbidden SNPNs" list for non-3GPP access or the "temporarily forbidden SNPNs" list for non-3GPP access has a value greater than or equal to 1 and less than the UE implementation-specific maximum value, the UE may delete, from the "permanently forbidden SNPNs" list for non-3GPP access or the "temporarily forbidden SNPNs" list for non-3GPP access, the SNPN ID corresponding to the updated entry.

### - Behavior based on the event counter #1 and the reject cause value

In a case that the UE operating in the SNPN access operation mode receives the reject message (registration reject message, service reject message, or authentication reject message) without integrity protection including the reject cause value over non-3GPP access in the procedure (service request procedure) in a case that the UE is registered with or connected to the SNPN service via the PLMN or the procedure (registration procedure or authentication procedure) used in a case that the UE attempts to connect to the SNPN service via the PLMN, and in a case that the event counter #1 has a value greater than or equal to 1 and less than the UE implementation-specific maximum value, then the UE may set validity of non-3GPP access for each entry of the list of subscription data. Note that the validity of non-3GPP access may mean that either one or both of a connection by the UE to the SNPN via the PLMN and a direct connection by the UE to the SNPN over non-3GPP access are valid.

Here, the reject cause value may be any one or multiple of the reject cause value #3, and/or the reject cause value #6, and/or the reject cause value #7, and/or the reject cause value #27, and/or the reject cause value #72, and/or the reject cause value #74, and/or the reject cause value #75. Furthermore, the setting of the validity of non-3GPP access may be performed in a case that the UE supports the use of credentials provided by the credential holder in the SNPN connection.

### 3.2. First Embodiment

In the first embodiment of the present invention, the UE is directly connected to the SNPN or the SNPN service over non-3GPP access, and the UE receives the registration reject message or service request message or authentication reject message including the reject cause value (the 5GMM cause value) in the registration procedure or the service request procedure or the authentication procedure. Note that the first embodiment is referred to as the present embodiment in the present section.

Furthermore, in the present embodiment, the UE uses the same attempt counter and/or the same event counter in a case of connecting to the SNPN or the SNPN service via the PLMN and in a case of directly connecting to the SNPN or the SNPN service over non-3GPP access. To be more specific, in the present embodiment, the UE may use the same attempt counter #2 and/or the same event counter #2 in both connection forms of connecting to the SNPN or the SNPN service via the PLMN and directly connecting to the SNPN or the SNPN service over non-3GPP access.

Note that, in the present embodiment, the counter stored, maintained and managed by the UE may be the attempt counter #2 or the event counter #2. Note that the UE maintaining, storing and managing the attempt counter #2 or the event counter #2 may be the UE operating in the SNPN access operation mode.

Furthermore, in the present embodiment, the UE may store, maintain, and manage the "permanently forbidden SNPNs" list and/or the "temporarily forbidden SNPNs" list.

Note that the "permanently forbidden SNPNs" list and/or the "temporarily forbidden SNPNs" list may be used in a case that the UE connects to the SNPN or the SNPN service via the PLMN and directly connects to the SNPN or the SNPN service over non-3GPP access.

As an extension of the processing in Section 3.1.4, the present embodiment further takes account of the case in which the UE directly connects to the SNPN over non-3GPP access.

Here, the reject cause value(s) (the 5GMM cause value(s)) included in the registration reject message, service request message, or authentication reject message received by the UE may be any one or multiple of Illegal UE (reject cause value #3), Illegal ME (reject cause value #6), 5GS services not allowed (reject cause value #7), N1 mode not allowed (reject cause value #27), non-3GPP access to 5GCN not allowed (reject cause value #72), Temporarily not authorized for this SNPN (reject cause value #74), or Permanently not authorized for this SNPN (reject cause value #75).

In the present embodiment, the registration procedure may be the initial registration procedure or the mobility and periodic registration update procedure. Furthermore, in the present embodiment, the registration procedure may be the registration for the onboarding service in the SNPN or performance of the initial registration in the SNPN for the onboarding service unless otherwise specified.

Note that the present embodiment may be a behavior performed in a case that the UE and/or the network performs one or more procedures or a combination of processing operations described in Section 3.1 and that the UE receives any or a combination of the registration reject message, the service reject message, or the authentication reject message from the network. In the present embodiment, any one or a combination of the registration reject message, the service reject message, and the authentication reject message is also simply referred to as the reject message.

On the other hand, in a case of receiving the registration accept message, the service accept message, or the authentication accept message in the registration procedure, the service request procedure, or the authentication procedure, the UE of the present embodiment may delete or reset the attempt counter #2 and/or the event counter #2.

Description will be given of details of processing related to management of various counters after the UE of the present embodiment receives the reject message from the network.

### - Increment the attempt counter #2

In a case that the UE operating in the SNPN access operation mode receives the reject message (registration reject message, service reject message, or authentication reject message) without integrity protection including the reject cause value over non-3GPP access in the procedure (service request procedure) in a case that the UE is directly connected to the SNPN service over non-3GPP access or in the procedure (registration procedure or authentication procedure) used in a case that the UE attempts to connect to the SNPN service via over-3GPP access, the UE may increment the attempt counter #2 or the value of the attempt counter #2 by 1. Here, the reject cause value may be the reject cause value #27 and/or the reject cause value #72 and/or the reject cause value #74 and/or the reject cause value #75.

Furthermore, the addition in the attempt counter #2 may be performed during running of the timer T3247. Here, the timer T3247 may be a timer that is started in a case that the UE receives the registration reject message, the service reject message, or the authentication reject message. Furthermore, the timer T3247 may be a timer that is started in a case that various reject messages (registration reject message, service reject message or authentication reject message) received by the UE are non-integrity protected.

The addition in the attempt counter #2 may be performed in a case that the reject cause value is the reject cause value #27 and/or the reject cause value #72. The addition in the attempt counter #2 may be performed in a case that the reject cause value is the reject cause value #74 and/or the reject cause value #75, and that the UE receives the reject message (registration reject message, service reject message, or authentication reject message), and that the attempt counter #2 has a value less than or equal to the UE implementation-specific maximum value.

Alternatively, also in a case that the UE operating in the SNPN access operation mode receives the non-integrity protected registration reject message including Illegal UE (#3) and/or Illegal ME (#6) and/or 5GSP services not allowed (#7) as the reject cause value over non-3GPP access in the registration for the onboarding service in the SNPN over non-3GPP access or the initial registration procedure with the SNPN for the onboarding service, then the UE may increment the attempt counter #2 or the value of the attempt counter #2 by 1.

### - Increment the event counter #2

In a case that the UE operating in the SNPN access operation mode receives the reject message (registration reject message, service reject message, or authentication reject message) without integrity protection including the reject cause value over non-3GPP access in the procedure (service request procedure) in a case that the UE is directly registered with or connected to the SNPN service over non-3GPP access or a procedure (registration procedure or authentication procedure) used in a case that the UE attempts to connect to the SNPN service over non-3GPP access, the UE may increment the event counter #2 or the value of the event counter #2 by 1. Here, the reject cause value may be Illegal UE (#3), and/or Illegal ME (#6), and/or 5GS services not allowed (#7).

Furthermore, the addition in the event counter #2 may be performed during running of the timer T3247. Here, the timer T3247 may be a timer that is started in a case that the UE receives the registration reject message, the service reject message, or the authentication reject message. Furthermore, the timer T3247 may be a timer that is started in a case that various reject messages (registration reject message, service reject message or authentication reject message) received by the UE are non-integrity protected.

The addition in the event counter #2 may be performed in a case that the UE is not registered on another access (3GPP access) and that the event counter #2 has a value less than or equal to the UE implementation-specific maximum value.

Alternatively, in a case that the UE operating in the SNPN access operation mode does not register with the SNPN over non-3GPP access for the onboarding service and does not perform the initial registration procedure with the SNPN for the onboarding service, and receives, over non-3GPP access, the non-integrity protected registration reject message including Illegal UE #3 and/or Illegal ME #6 and/or 5GS services not allowed #7 as the reject cause value, then the UE may increment the event counter #2 or the value of the event counter #2 by 1.

### - Configure the attempt counter #2 with the UE implementation-specific maximum value.

In a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service over non-3GPP access, or the procedure (registration procedure or authentication procedure) used in a case that the UE attempts to connect to the SNPN service over non-3GPP access, or the procedure for the onboarding service in the SNPN (registration procedure or authentication procedure), or in a case that the UE is registered with the SNPN for the onboarding service, or based on the reception, the UE may configure the attempt counter #2 with the UE implementation-specific maximum value, store or add, in or to the list of permanently forbidden SNPNs for the onboarding service, the SNPN ID for which the registration procedure for the onboarding service has been performed, and perform the SNPN selection for the onboarding service. Here, the reject cause value may be Illegal UE (#3), and/or Illegal ME (#6), and/or 5GS services not allowed (#7).

Alternatively, in a case that the UE operating in the SNPN access operation mode receives, over non-3GPP access, the integrity protected reject message (registration reject message, service reject message, or authentication reject message) including the reject cause value over non-3GPP access in the procedure (service request procedure) in a case that the UE is registered with or connected to the SNPN service over non-3GPP access, or the procedure (registration procedure or authentication procedure) used in a case that the UE attempts to connect to the SNPN service over non-3GPP access, or based on the reception, the UE may configure the attempt counter #2 with the UE implementation-specific maximum value and disable the N1 mode capability for non-3GPP access. Note that the procedure in which the UE receives the integrity protected reject message need not be the procedure in a case that the UE is not registered with the SNPN for the onboarding service or the procedure (registration procedure or authentication procedure) for the onboarding service in the SNPN. Here, the reject cause value may be N1 mode not allowed (#27) and/or Non-3GPP access to 5GCN not allowed (#72).

Alternatively, in a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service over non-3GPP access, or the procedure (registration procedure or authentication procedure) used in a case that the UE attempts to connect to the SNPN service over non-3GPP access, or based on the reception, the UE may configure the attempt counter #2 with the UE implementation-specific maximum value. Here, the reject cause value may be Temporarily not authorized for this SNPN (#74) and/or Permanently not authorized for this SNPN (#75).

### - Configure the event counter #2 with the UE implementation-specific maximum value

In a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service over non-3GPP access, or the procedure (registration procedure or authentication procedure) used in a case that the UE attempts to connect to the SNPN service over non-3GPP access, or based on the reception, the UE may configure the event counter #2 or the value of the event counter #2 with the UE implementation-specific maximum value. Here, the reject cause value may be Illegal UE (#3), and/or Illegal ME (#6), and/or 5GS services not allowed (#7). Here, the procedure in which the UE receives the reject message need not be the registration procedure for the onboarding service in the SNPN.

### - Behavior based on the attempt counter #2 and the reject cause value.

In a case that the UE operating in the SNPN access operation mode receives the reject message (registration reject message or service reject message or authentication reject message) without integrity protection including the reject cause value over non-3GPP access in the procedure in a case that the UE is directly registered with or connected to the SNPN service over non-3GPP access or the procedure of attempting the connection (registration procedure or authentication procedure) and that the attempt counter #2 has a value greater than or equal to 1 and less than the UE implementation specific maximum value, the UE may delete, from the "permanently forbidden SNPNs" list for non-3GPP access or the "temporarily forbidden SNPNs" list for non-3GPP access, the corresponding SNPN ID for which the procedure is being performed. Here, the reject cause value may be any one or multiple of the reject cause value #3, and/or the reject cause value #6, and/or the reject cause value #7, and/or the reject cause value #27, and/or the reject cause value #72, and/or the reject cause value #74, and/or the reject cause value #75. Furthermore, the deletion of the SNPN ID may be performed in a case that the UE supports, in the SNPN connection, the use of credentials provided by the credential holder.

Furthermore, in addition to the above-described conditions, in a case that the timer T3247, which is started in a case that the UE receives the registration reject message or the service reject message as the non-integrity protected reject message including the reject cause value, the UE may re-enable the N1mode capability for non-3GPP access, and in a case that the attempt counter #2 has a value greater than or equal to 1 and less than the UE implementation-specific maximum value, the UE may delete, from the "permanently forbidden SNPNs" list or the "temporarily forbidden SNPNs" list, the corresponding SNPN ID for which the procedure is being performed.

Alternatively, in addition to the above-described conditions, in a case that power is turned off or the UICC including the USIM is removed from the UE, the UE may delete, from the "permanently forbidden SNPNs" list for non-3GPP access or the "temporarily forbidden SNPNs" list for non-3GPP access, the corresponding SNPN ID for which the procedure is being performed.

Alternatively, in addition to the above-described conditions, in a case that an entry in the List of subscription data is updated, and the UE does not support the use of credentials from the credential holder in connection to the SNPN, and the attempt counter #2 corresponding to the updated entry has a value greater than or equal to 1 and less than the UE implementation-specific maximum value, then the UE may delete, from the "permanently forbidden SNPNs" list for non-3GPP access or the "temporarily forbidden SNPNs" list for non-3GPP access, the corresponding SNPN ID for which the procedure is being performed.

Alternatively, in addition to the above-described conditions, in a case that an entry in the List of subscription data is updated, and the UE supports the use of credentials from the credential holder in connection to the SNPN, and the attempt counter #2 for the SNPN corresponding to the entry included in the "permanently forbidden SNPNs" list for non-3GPP access or the "temporarily forbidden SNPNs" list for non-3GPP access has a value greater than or equal to 1 and less than the UE implementation-specific maximum value, then the UE may delete, from the "permanently forbidden SNPNs" list for non-3GPP access or the "temporarily forbidden SNPNs" list for non-3GPP access, the SNPN ID corresponding to the updated entry.

### - Behavior based on the event counter #2 and the reject cause value

In a case that the UE operating in the SNPN access operation mode receives, over non-3GPP access, the reject message (registration reject message, service reject message, or authentication reject message) without integrity protection including the reject cause value over non-3GPP access in the procedure (service request procedure) in a case that the UE is registered with or connected to the SNPN service over non-3GPP access or the procedure (registration procedure or authentication procedure) used in a case that the UE attempts to connect to the SNPN service over non-3GPP access, and in a case that the event counter #2 has a value less than the UE implementation-specific maximum value, then the UE may set validity of non-3GPP access for each entry of the list of subscription data. Note that the validity of non-3GPP access may mean that either one or both of a connection by the UE to the SNPN via the PLMN and a direct connection by the UE to the SNPN over non-3GPP access are valid.

Here, the reject cause value may be any one or multiple of the reject cause value #3, and/or the reject cause value #6, and/or the reject cause value #7, and/or the reject cause value #27, and/or the reject cause value #72, and/or the reject cause value #74, and/or the reject cause value #75. Furthermore, the setting of the validity of non-3GPP access may be performed in a case that the UE supports the use of credentials provided by the credential holder in the SNPN connection.

### 3.3. Second Embodiment

In a second embodiment of the present invention, the UE directly connects to the SNPN or the SNPN service over non-3GPP access, and the UE receives the registration reject message, service request message, or authentication reject message including the reject cause value (5GMM cause value) in the registration procedure, the service request procedure, or the authentication procedure. Note that the second embodiment is also referred to as the present embodiment in the present section.

Furthermore, in the present embodiment, the UE uses different attempt counters and/or different event counters in a case that the UE connects to the SNPN or the SNPN service via the PLMN and in a case that the UE directly connects to the SNPN or the SNPN service over non-3GPP access. In more detail, in the present embodiment, the UE may use the attempt counter #1 and the event counter #1 in a case of connecting to the SNPN or the SNPN service via the PLMN, and may use the attempt counter #3 and the event counter #3 in a case of directly connecting to the SNPN or the SNPN service over non-3GPP access.

Note that, in the present embodiment, the counter stored, maintained and managed by the UE may be the attempt counter #3 or the event counter #3. Note that the UE maintaining and/or storing and/or managing the attempt counter #3 or the event counter #3 may be the UE operating in the SNPN access operation mode.

Furthermore, in the present embodiment, the UE may store, maintain, and manage the "permanently forbidden SNPNs" list and/or the "temporarily forbidden SNPNs" list.

Note that the "permanently forbidden SNPNs" list and/or the "temporarily forbidden SNPNs" list may be independently managed as a list associated with a case in which the UE connects to the SNPN or the SNPN service via the PLMN and a list associated with a case in which the UE directly connects to the SNPN or the SNPN service over non-3GPP access.

In other words, the UE may store, maintain and manage the "permanently forbidden SNPNs" list and/or the "temporarily forbidden SNPNs" list for connection to the SNPN or SNPN service via the PLMN and the "permanently forbidden SNPNs" list and/or the "temporarily forbidden SNPNs" list for direct connection to the SNPN or SNPN service over non-3GPP access.

As an extension of the processing in Section 3.1.4, the present embodiment further takes account of the case in which the UE directly connects to the SNPN over non-3GPP access.

Here, the reject cause value(s) (the 5GMM cause value(s)) included in the registration reject message, service request message, or authentication reject message received by the UE may be any one or multiple of Illegal UE (reject cause value #3), Illegal ME (reject cause value #6), 5GS services not allowed (reject cause value #7), N1 mode not allowed (reject cause value #27), non-3GPP access to 5GCN not allowed (reject cause value #72), Temporarily not authorized for this SNPN (reject cause value #74), or Permanently not authorized for this SNPN (reject cause value #75).

In the present embodiment, the registration procedure may be the initial registration procedure or the mobility and periodic registration update procedure. Furthermore, in the present embodiment, the registration procedure may be the registration for the onboarding service in the SNPN or performance of the initial registration in the SNPN for the onboarding service unless otherwise specified.

Note that the present embodiment may be a behavior performed in a case that the UE and/or the network performs one or more procedures or a combination of processing operations described in Section 3.1 and that the UE receives any or a combination of the registration reject message, the service reject message, or the authentication reject message from the network. In the present embodiment, any one or a combination of the registration reject message, the service reject message, and the authentication reject message is also simply referred to as the reject message.

On the other hand, in a case of receiving the registration accept message, the service accept message, or the authentication accept message in the registration procedure, the service request procedure, or the authentication procedure, the UE of the present embodiment may delete or reset the attempt counter #3 and/or the event counter #3.

Description will be given of details of processing related to management of various counters after the UE of the present embodiment receives the reject message from the network.

### - Increment the attempt counter #3

In a case that the UE operating in the SNPN access operation mode receives the reject message (registration reject message, service reject message, or authentication reject message) without integrity protection including the reject cause value over non-3GPP access in the procedure (service request procedure) in a case that the UE is directly connected to the SNPN service over non-3GPP access or the procedure (registration procedure or authentication procedure) used in a case that the UE attempts to connect to SNPN service over non-3GPP access, then the UE may increment the attempt counter #3 or the value of the attempt counter #3 by 1. Here, the reject cause value may be the reject cause value #27 and/or the reject cause value #72 and/or the reject cause value #74 and/or the reject cause value #75.

Furthermore, the addition in the attempt counter #3 may be performed during running of the timer T3247. Here, the timer T3247 may be a timer that is started in a case that the UE receives the registration reject message, the service reject message, or the authentication reject message. Furthermore, the timer T3247 may be a timer that is started in a case that various reject messages (registration reject message, service reject message or authentication reject message) received by the UE are non-integrity protected.

The addition in the attempt counter #3 may be performed in a case that the reject cause value is the reject cause value #27 and/or the reject cause value #72. The addition in the attempt counter #3 may be performed in a case that the reject cause value is the reject cause value #74 and/or the reject cause value #75 and that the UE receives the reject message (registration reject message, service reject message, or authentication reject message) and that the attempt counter #3 has a value less than or equal to the UE implementation-specific maximum value.

Alternatively, in a case that the UE operating in the SNPN access operation mode receives the non-integrity protected registration reject message including Illegal UE (#3) and/or Illegal ME (#6) and/or 5GS services not allowed (#7) as the reject cause value over non-3GPP access in the registration with the SNPN for the onboarding service over non-3GPP access or the initial registration procedure with the SNPN for the onboarding service, the UE may increment the attempt counter #3 or the value of the attempt counter #3 by 1.

### - Increment the event counter #3

In a case that the UE operating in the SNPN access operation mode receives the reject message (registration reject message, service reject message, or authentication reject message) without integrity protection including the reject cause value over non-3GPP access in the procedure (service request procedure) in a case that the UE is directly registered with or connected to the SNPN service over non-3GPP access or the procedure (registration procedure or authentication procedure) used in a case that the UE attempts to connect to the SNPN service over non-3GPP access, the UE may increment the event counter #3 or the value of the event counter #3 by 1. Here, the reject cause value may be Illegal UE (#3), and/or Illegal ME (#6), and/or 5GS services not allowed (#7).

Furthermore, the addition in the event counter #3 may be performed during running of the timer T3247. Here, the timer T3247 may be a timer that is started in a case that the UE receives the registration reject message, the service reject message, or the authentication reject message. Furthermore, the timer T3247 may be a timer that is started in a case that various reject messages (registration reject message, service reject message or authentication reject message) received by the UE are non-integrity protected.

The addition in the event counter #3 may be performed in a case that the UE is not registered on another access (3GPP access) and that the event counter #3 has a value less than or equal to the UE implementation specific maximum value.

Alternatively, also in a case that the UE operating in the SNPN access operation mode does not register with the SNPN for the onboarding service over non-3GPP access or does not perform the initial registration procedure with the SNPN for the onboarding service, and the UE receives, over non-3GPP access, the non-integrity protected registration reject message including Illegal UE (#3) and/or Illegal ME (#6) and/or 5GS services not allowed (#7) as the reject cause value, then the UE may also increment the event counter #3 or the value of the event counter #3 by 1.

### - Configure the attempt counter #3 with the UE implementation-specific maximum value

In a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service over non-3GPP access, or the procedure (registration procedure or authentication procedure) used in a case that the UE attempts to connect to the SNPN service over non-3GPP access, or the procedure for the onboarding service in the SNPN (registration procedure or authentication procedure), or in a case that the UE is registered with the SNPN for the onboarding service, or based on the reception, the UE may configure the attempt counter #3 with the UE implementation-specific maximum value, store or add, in or to the list of permanently forbidden SNPNs for the onboarding service, the SNPN ID for which the registration procedure for the onboarding service has been performed, and perform the SNPN selection for the onboarding service. Here, the reject cause value may be Illegal UE (#3), and/or Illegal ME (#6), and/or 5GS services not allowed (#7).

Alternatively, in a case that the UE operating in the SNPN access operation mode receives, over non-3GPP access, the integrity protected reject message (registration reject message, service reject message, or authentication reject message) including the reject cause value over non-3GPP access in the procedure (service request procedure) in a case that the UE is registered with or connected to the SNPN service over non-3GPP access, or the procedure (registration procedure or authentication procedure) used in a case that the UE attempts to connect to the SNPN service over non-3GPP access, or based on the reception, the UE may configure the attempt counter #3 with the UE implementation-specific maximum value and disable the N1 mode capability for non-3GPP access. Note that the procedure in which the UE receives the integrity protected reject message need not be the procedure in a case that the UE is not registered with the SNPN for the onboarding service or the procedure (registration procedure or authentication procedure) for the onboarding service in the SNPN. Here, the reject cause value may be N1 mode not allowed (#27) and/or Non-3GPP access to 5GCN not allowed (#72).

Alternatively, in a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service over non-3GPP access, or the procedure (registration procedure or authentication procedure) used in a case that the UE attempts to connect to the SNPN service over non-3GPP access, or based on the reception, the UE may configure the attempt counter #3 with the UE implementation-specific maximum value. Here, the reject cause value may be Temporarily not authorized for this SNPN (#74) and/or Permanently not authorized for this SNPN (#75).

### - Configure the event counter #3 with the UE implementation-specific maximum value

In a case that the UE operating in the SNPN access operation mode receives the integrity protected reject message (registration reject message, service reject message, or authentication reject message) including the reject cause value over non-3GPP access in the procedure (service request procedure) in a case that the UE is registered with or connected to the SNPN service over non-3GPP access, or the procedure (registration procedure or authentication procedure) used in a case that the UE attempts to connect to the SNPN service over non-3GPP access, or based on the reception, the UE may configure the event counter #3 or the value of the event counter #3 with the UE implementation-specific maximum value. Here, the reject cause value may be Illegal UE (#3), and/or Illegal ME (#6), and/or 5GS services not allowed (#7). Here, the procedure in which the UE receives the reject message need not be the registration procedure for the onboarding service in the SNPN.

### - Behavior based on the attempt counter #3 and the reject cause value.

In a case that the UE operating in the SNPN access operation mode receives the reject message (registration reject message, service reject message, or authentication reject message) without integrity protection including the reject cause value over non-3GPP access in the procedure (service request procedure) in a case that the UE is directly registered with or connected to the SNPN service over non-3GPP access, or the procedure (registration procedure or authentication procedure) used in a case that the UE attempts to connect to the SNPN service over non-3GPP access, and the attempt counter #3 has a value greater than or equal to 1 and less than the UE implementation-specific maximum value, or based on the reception, the UE may delete, from the "permanently forbidden SNPNs" list for non-3GPP access or the "temporarily forbidden SNPNs" list for non-3GPP access, the corresponding SNPN ID for which the procedure is being performed. Here, the reject cause value may be any one or multiple of the reject cause value #3, and/or the reject cause value #6, and/or the reject cause value #7, and/or the reject cause value #27, and/or the reject cause value #72, and/or the reject cause value #74, and/or the reject cause value #75. Furthermore, the deletion of the SNPN ID may be performed in a case that the UE supports, in the SNPN connection, the use of credentials provided by the credential holder.

Furthermore, in addition to the above-described conditions, in a case that the timer T3247, which is started in a case that the UE receives the registration reject message or the service reject message as the non-integrity protected reject message including the reject cause value, the UE may re-enable the N1mode capability for non-3GPP access, and in a case that the attempt counter #3 has a value greater than or equal to 1 and less than the UE implementation-specific maximum value, the UE may delete, from the "permanently forbidden SNPNs" list or the "temporarily forbidden SNPNs" list, the corresponding SNPN ID for which the procedure is being performed.

Alternatively, in addition to the above-described conditions, in a case that power is turned off or the UICC including the USIM is removed from the UE, the UE may delete, from the "permanently forbidden SNPNs" list for non-3GPP access or the "temporarily forbidden SNPNs" list for non-3GPP access, the corresponding SNPN ID for which the procedure is being performed.

Alternatively, in addition to the above-described conditions, in a case that an entry in the List of subscription data is updated, the UE does not support the use of credentials from the credential holder in connection to the SNPN, and the attempt counter #3 corresponding to the updated entry has a value greater than or equal to 1 and less than the UE implementation-specific maximum value, the UE may delete, from the "permanently forbidden SNPNs" list for non-3GPP access or the "temporarily forbidden SNPNs" list for non-3GPP access, the corresponding SNPN ID for which the procedure is being performed.

Alternatively, in addition to the above-described conditions, in a case that an entry in the List of subscription data is updated, the UE supports the use of credentials from the credential holder in connection to the SNPN, and the attempt counter #3 for the SNPN corresponding to the entry included in the "permanently forbidden SNPNs" list for non-3GPP access or the "temporarily forbidden SNPNs" list for non-3GPP access has a value greater than or equal to 1 and less than the UE implementation-specific maximum value, the UE may delete, from the "permanently forbidden SNPNs" list for non-3GPP access or the "temporarily forbidden SNPNs" list for non-3GPP access, the SNPN ID corresponding to the updated entry.

### - Behavior based on the event counter #3 and the reject cause value

In a case that the UE operating in the SNPN access operation mode receives the reject message (registration reject message or service reject message or authentication reject message) without integrity protection including the reject cause value over non-3GPP access in the procedure (service request procedure) in a case that the UE is directly registered with or connected to the SNPN service over non-3GPP access or the procedure (registration procedure or authentication procedure) used in a case that the UE attempts to connect to the SNPN service over non-3GPP access, and in a case that the event counter #3 has a value less than the UE implementation-specific maximum value, then the UE may set validity of non-3GPP access for each entry of the list of subscription data. Note that the validity of non-3GPP access may mean that either one or both of a connection by the UE to the SNPN via the PLMN and a direct connection by the UE to the SNPN over non-3GPP access are valid.

Here, the reject cause value may be any one or multiple of the reject cause value #3, and/or the reject cause value #6, and/or the reject cause value #7, and/or the reject cause value #27, and/or the reject cause value #72, and/or the reject cause value #74, and/or the reject cause value #75. Furthermore, the setting of the validity of non-3GPP access may be performed in a case that the UE supports the use of credentials provided by the credential holder in the SNPN connection.

### 4. Modifications

A program running on an apparatus according to the present invention may serve as a program that controls a Central Processing Unit (CPU) and the like to cause a computer to operate in such a manner as to realize the functions of the embodiment according to the present invention. Programs or information handled by the programs are temporarily stored in a volatile memory such as a Random Access Memory (RAM), a non-volatile memory such as a flash memory, a Hard Disk Drive (HDD), or another storage apparatus system.

Note that a program for realizing such the functions of the embodiment according to the present invention may be recorded on a computer-readable recording medium. The functions may be realized by causing a computer system to read the program recorded on the recording medium and execute the program. It is assumed that the "computer system" refers to a computer system built into the apparatuses, and the computer system includes an operating system and hardware components such as a peripheral device. Furthermore, the "computer-readable recording medium" may be a semiconductor recording medium, an optical recording medium, a magnetic recording medium, a medium dynamically holding the program for a short time, or any other computer readable recording medium.

In addition, each functional block or various features of the apparatuses used in the aforementioned embodiments may be implemented or performed on an electric circuit, for example, an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a known processor, a controller, a micro-controller, or a state machine. The aforementioned electric circuit may include a digital circuit or may include an analog circuit. In addition, in a case that a circuit integration technology that replaces the present integrated circuits appears with advances in semiconductor technologies, one or multiple aspects of the present invention can also use a new integrated circuit based on the technology.

Note that the invention of the present application is not limited to the above-described embodiments. Although apparatuses have been described as an example in the embodiments, the invention of the present application is not limited to these apparatuses, and is applicable to a terminal apparatus or a communication apparatus of a fixed-type or a non-stationary electronic apparatus installed indoors or outdoors, for example, an AV apparatus, a kitchen apparatus, a cleaning or washing machine, an air-conditioning apparatus, office equipment, a vending machine, and other household apparatuses.

Although the embodiments of the present invention have been described in detail above referring to the drawings, the specific configuration is not limited to the embodiments and includes, for example, design changes within the scope that do not depart from the gist of the present invention. Furthermore, in the present invention, various modifications are possible within the scope of claims, and embodiments that are made by suitably combining technical means disclosed according to the different embodiments are also included in the technical scope of the present invention. In addition, a configuration in which elements described in the respective embodiments and having mutually similar effects are substituted for one another is also included.

An embodiment of the present invention provides a User Equipment (UE) including a transmission and/or reception unit, a controller, and a storage unit, wherein the UE operates in a Stand-alone Non-public Network (SNPN) access operation mode, and the storage unit stores a first counter, the first counter being an SNPN-specific attempt counter for non-3GPP access, and in a procedure in a case that the UE is directly connected to an SNPN service over the non-3GPP access or a procedure in a case that the UE attempts to connect to the SNPN service over the non-3GPP access, the transmission and/or reception unit receives, from a network over the non-3GPP access, a registration reject message that includes first identification information and that is not integrity protected or a service reject message that is not integrity protected, the first identification information being a reject cause value indicating that an N1 mode is not allowed and/or that 5GCN connection over the non-3GPP access is not allowed and/or temporarily not allowed for the SNPN and/or permanently not allowed for the SNPN and/or that the UE is illegal and/or that an ME is illegal and/or that 5GS services are not allowed, and the controller starts running a timer based on reception of the registration reject message or the service reject message, the first timer being a timer started in a case that the transmission and/or reception unit receives the registration reject message or the service reject message and that each message is non-integrity protected, and in a case that the first timer is running, the controller increments a value of the first counter by 1 based on reception of the registration reject message including the first identification information.

An embodiment of the present invention provides a user equipment (UE) including a transmission and/or reception unit, a controller, and a storage unit, wherein the storage unit stores a first counter, the first counter being a Stand-alone Non-public network (SNPN)-specific attempt counter for non-3GPP access, and in a procedure in a case that the UE is directly connected to an SNPN service over the non-3GPP access or a procedure in a case that the UE attempts to connect to the SNPN service over the non-3GPP access, the transmission and/or reception unit receives, from a network via over non-3GPP access, a registration reject message, a service reject message, or an authentication reject message that includes first identification information, the first identification information being a reject cause value indicating that the UE is illegal and/or that an ME is illegal and/or that 5GS services are not allowed, and reception of the registration reject message is performed in an initial registration procedure for an onboarding service, and in a case of receiving the registration reject message, the service reject message, or the authentication reject message that includes the first identification information and that is integrity protected, the controller configures the first counter with a UE implementation-specific maximum value.

An embodiment of the present invention provides a User Equipment (UE) including a transmission and/or reception unit, a controller, and a storage unit, wherein the storage unit stores a first counter, and/or a first list, and/or a second list, the first counter being a Stand-alone Non-Public Network (SNPN)-specific attempt counter for non-3GPP access, the first list being a "permanently forbidden SNPNs" list for non-3GPP access, and the second list being a "temporarily forbidden SNPNs" list for non-3GPP access, and in a procedure in a case that the UE is directly connected to an SNPN service over the non-3GPP access or a procedure in a case that the UE attempts to connect to the SNPN service over the non-3GPP access, the transmission and/or reception unit receives, from a network over the non-3GPP access, a registration reject message that includes first identification information and that is not integrity protected or a service reject message that is not integrity protected, the first identification information being a reject cause value indicating that the UE is illegal and/or that an ME is illegal and/or that 5GS services are not allowed and/or that an N1 mode is not allowed and/or that 5GCN connection over the non-3GPP access is not allowed and/or temporarily not allowed for the SNPN and/or permanently not allowed for the SNPN and/or that the UE is illegal and/or that the ME is illegal and/or that 5GS services are not allowed, and the controller starts a first timer based on reception of the registration reject message or the service reject message, the first timer being a timer started in a case that the transmission and/or reception unit receives the registration reject message or the service reject message and that each message is non-integrity protected, and in a case that the first timer expires and the first counter has a value greater than or equal to 1 and less than a UE implementation-specific maximum value, the controller deletes a corresponding SNPN ID from the first list or the second list stored in the storage unit.

### Cross-Reference of Related Application

The present application claims priority of JP 2022-118516, filed on July 26, 2022, and all the contents thereof are included herein by the reference.

### Reference Signs List

1 Mobile communication system
10 UE_A
120 Access network_B
122 gNB
130 UPF
132 SMF
140 AMF
141 new AMF
142 old AMF
150 UDM
200 Core network_B
240 N3IWF
250 DN

## Claims

1. A user equipment (UE) comprising:
a transmission and/or reception unit;
a controller; and
a storage unit, wherein
in a case that the UE operates in a Stand-alone Non-public Network (SNPN) access operation mode,
the storage unit stores a first counter,
the first counter being an SNPN-specific attempt counter for non-3GPP access, and
the first counter being further used in a case of direct connection to the SNPN over the non-3GPP access, and
the controller increments the first counter in a case that the transmission and/or reception unit receives first control information over the non-3GPP access,
the first control information being a reject cause value indicating that an N1 mode is not allowed, or that 5GCN connection over the non-3GPP access is not allowed, or temporarily not allowed for the SNPN, or permanently not allowed for the SNPN, and
the first control information being further included in a registration reject message that is not integrity protected or a service reject message that is not integrity protected.

2. The UE according to claim 1, wherein
the first counter is also used in a case that the UE connects to the SNPN service via a Public Land Mobile Network (PLMN).

3. The UE according to claim 1, wherein
in a case that the transmission and/or reception unit receives the first control information included in the registration reject message that is integrity protected or the service reject message that is integrity protected,
the controller configures the first counter with a UE implementation-specific maximum value.
